(19) Europäisches Patentamt
European Patent Office
Office européen des brevets

(11) **EP 4 733 221 A1**

(12) **EUROPEAN PATENT APPLICATION**
published in accordance with Art. 153(4) EPC

(43) Date of publication:
**29.04.2026 Bulletin 2026/18**

(21) Application number: **24848544.3**

(22) Date of filing: **31.01.2024**

(51) International Patent Classification (IPC):
**B65D 81/24** (2006.01)    **B65D 81/26** (2006.01)
**C03C 25/40** (2006.01)    **D03D 15/267** (2021.01)
**D06M 13/513** (2006.01)

(52) Cooperative Patent Classification (CPC):
**B65D 81/24; B65D 81/26; C03C 25/40;
D03D 15/267; D06M 13/513**

(86) International application number:
**PCT/JP2024/003073**

(87) International publication number:
**WO 2025/027881 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.07.2023  JP 2023124261
08.08.2023  JP 2023129381**

(71) Applicant: **ASAHI KASEI KABUSHIKI KAISHA
Tokyo 100-0006 (JP)**

(72) Inventors:
• **HASHIMOTO, Yuka
Tokyo 100-0006 (JP)**
• **HIROSE, Amane
Tokyo 100-0006 (JP)**

(74) Representative: **Hoffmann Eitle
Patent- und Rechtsanwälte PartmbB
Arabellastraße 30
81925 München (DE)**

(54) **GLASS CLOTH STORAGE METHOD AND GLASS CLOTH PACKAGE**

(57)    The present disclosure provides a glass fabric storage method and a glass fabric package with which it is possible to maintain the dielectric properties of a glass fabric having excellent dielectric characteristics. In the glass fabric, a glass yarn including a plurality of filaments is configured as a warp and a weft, and the dielectric loss tangent at 10 GHz of the glass fabric is 0.00200 or less. The storage method includes storing the glass fabric in an atmosphere in which the storage environment has an average dew point of 18°Cdp or less and an average temperature of 100°C or less under atmospheric pressure. The package includes a packaging material and a glass fabric housed inside the packaging material, and the water vapor permeability measured under conditions of 40°C and 90% Rh of the packaging material is 8 g/(m$^2$×24hr) or less.

Fig. 1

(1a)          (1b)          (1c)

EP 4 733 221 A1

**Description**

TECHNICAL FIELD

The present disclosure relates to a glass fabric storage method and a glass fabric package. The present international application claims priority based on Japanese Patent Application No. 2023-124261 filed on July 31, 2023, and Japanese Patent Application No. 2023-129381 filed on August 8, 2023, the entirety of which is incorporated herein by reference.

BACKGROUND ART

Currently, the performance of information terminals such as smartphones is improving, and high-speed communication typified by 5G communication is advancing. With this background, for example, in printed circuit boards for high-speed communication, it is desired not only to improve the heat resistance, but also to further improve the dielectric characteristics of their insulating materials (e.g., a reduction in the dielectric loss tangent). Similarly, an improvement in the dielectric characteristics is also desired for those prepregs used as insulating materials of printed circuit boards, as well as glass yarns and glass fabrics that are contained in such prepregs.

As means for improving the dielectric characteristics, for example, methods of producing a prepreg using a low-dielectric glass are known (see PTLs 1 and 2). More specifically, PTL 1 describes producing a prepreg using glass yarns having a silicon dioxide ($SiO_2$) composition amount of 98% by mass to 100% by mass. PTL 2 describes heat-treating a quartz glass fabric for the purpose of further reducing the dielectric loss tangent.

PTL 3 describes that the Si-OH groups on the quartz glass surface are highly active and that, especially in a high-temperature atmosphere, the Si-OH groups absorb moisture through hydrogen bonding and cleave Si-O-Si bonds to further generate Si-OH groups ($SiO_2 + H_2O \Leftrightarrow$ Si-OH), and the generated Si-OH groups cause deterioration of the dielectric loss tangent of a glass fabric ([0006]). Accordingly, PTL 3 describes heating a quartz glass fabric in vacuum or in a gas having a dew point of 15°C or lower under conditions where the maximum heating temperature is 100°C to 600°C and the heating amount, which is represented by [heating temperature (°C) of 100°C or higher × heating time (h)], is 450 (°C·h) or more (Claim 1, etc.), at fthe time of heat-treating the quartz glass fabric for the purpose of recombining the Si-OH groups to form Si-O-Si bonds and thereby reduce the dielectric loss tangent of the glass fabric.

[CITATION LIST]

[PATENT LITERATURE]

[PTL 1] Japanese Unexamined Patent Publication (Kokai) No. 2018-127747
[PTL 2] Japanese Unexamined Patent Publication (Kokai) No. 2021-63320
[PTL 3] Japanese Patent No. 7269416

SUMMARY OF INVENTION

[TECHNICAL PROBLEM]

PTL 3 describes that the reaction of $SiO_2 + H_2O \Leftrightarrow$ Si-OH does not have enough activation energy at a temperature of lower than 100°C ([0025]). In this manner, it is conventionally believed that water has no effect on the dielectric loss tangent of a glass fabric in the temperature range below 100°C. In this respect, the present inventors discovered for the first time that, even if the dielectric loss tangent of a glass fabric at the time of its production is reduced by the means disclosed in PTLs 1 to 3, when the glass fabric is stored over an extended period, the generation of silanol groups due to the above-described equilibrium reaction proceeds even in an environment below 100°C, resulting in an increase in the dielectric loss tangent of the glass fabric.

In view of the above, an object of the present disclosure is to provide a glass fabric storage method and a glass fabric package, which can maintain the dielectric characteristics of a glass fabric having excellent dielectric characteristics.

[SOLUTION TO PROBLEM]

Some of the embodiments of the present disclosure are exemplified in the following [1] to [57].

[1] A method of storing a glass fabric, wherein

the glass fabric is configured using glass yarns containing plural filaments as warp yarns and weft yarns, and has a dielectric loss tangent at 10 GHz of 0.00200 or less, and

the method includes storing the glass fabric in an atmosphere that has an average dew point of 18°Cdp or lower and an average temperature of 100°C or lower under the atmospheric pressure of a storage environment.

[2] The method according to [1], wherein a silicon (Si) content in the glass yarns is 95.0% by mass to 100% by mass in terms of silicon dioxide ($SiO_2$).

[3] The method according to [1] or [2], wherein the glass fabric has, on its surface, a surface treatment agent containing a silane coupling agent.

[4] The method according to [3], wherein the surface treatment agent contains a silane coupling agent represented by the following Formula (1):

$$X(R)3_{-n}SiY_n \qquad (1)$$

(wherein, X represents an organic functional group having at least one of an amino group or a radical-reactive unsaturated double bond group; each Y independently represents an alkoxy group; n represents an integer of 1 to 3; and each R independently represents a group selected from the group consisting of a methyl group, an ethyl group, and a phenyl group).

[5] The method according to [4], wherein the surface treatment agent contains two or more kinds of silane coupling agents that are different in X of Formula (1).

[6] The method according to any one of [3] to [5], wherein the surface treatment agent contains two or more kinds of silane coupling agents that are different in molecular weight.

[7] The method according to any one of [3] to [6], further including, prior to the storing:

the step of surface-treating the glass fabric with the surface treatment agent containing a silane coupling agent; and

the step of opening the filaments of the thus surface-treated glass fabric.

[8] The method according to any one of [1] to [7], wherein the dielectric loss tangent at 10 GHz of the glass fabric is 0.00051 to 0.00200.

[9] The method according to any one of [1] to [8], wherein the warp yarns and/or the weft yarns of the glass fabric have a thread count in a range of 66 to 120 yarns/inch (= 66 to 120 yarns/25 mm).

[10] The method according to any one of [1] to [9], further including, prior to the storing, the step of heating the glass fabric at a temperature of 600°C or higher while transporting the glass fabric in a roll-to-roll manner.

[11] The method according to any one of [1] to [10], wherein the glass fabric is stored as a package in which the glass fabric is packaged in a box and/or a film-like packaging material.

[12] The method according to [11], wherein

the glass fabric is stored as a package in which the glass fabric is packaged in a film-like packaging material, and the film-like packaging material has a thickness of 50 $\mu$m or more.

[13] The method according to [11] or [12], wherein

the glass fabric is stored as a package in which the glass fabric is packaged in a film-like packaging material, and the film-like packaging material is an aluminum laminate film.

[14] The method according to any one of [11] to [13], wherein

the glass fabric is stored as a package in which the glass fabric is in the state of a roll wound on a hollow columnar core tube and packaged in a film-like packaging material, and

the film-like packaging material has a recess extending from one or both ends of the core tube into a hollow portion, or has an annular shape penetrating the hollow portion of the core tube.

[15] The method according to [14], wherein a ratio of the volume occupied by a space constituting the inside of the film-like packaging material is 50% or less with respect to the volume of the hollow portion of the core tube.

[16] The method according to [14] or [15], wherein the film-like packaging material has an annular shape penetrating the hollow portion of the core tube.

[17] The method according to [14] or [15], wherein the package is configured such that the glass fabric is hermetically sealed from the external environment by the film-like packaging material and the core tube.

[18] The method according to any one of [14] to [17], wherein the core tube has a water vapor transmission rate of 8 g/(m$^2$ × 24 hr) or lower as measured under the conditions of 40°C and 90%Rh.

[19] The method according to any one of [11] to [18], wherein the packaging material has a water vapor transmission rate of 8 g/(m$^2$ × 24 hr) or lower at a measurement temperature of 40°C and a measurement humidity of 90%Rh.

[20] The method according to any one of [11] to [19], wherein the package is configured to be dehumidified such that the inside of the package maintains an average dew point of 18°Cdp or lower.

[21] The method according to any one of [1] to [20], including storing the glass fabric at an average dew point of 13°Cdp to 18°Cdp under the atmospheric pressure of the storage environment.

[22] The method according to any one of [1] to [20], including storing the glass fabric at an average dew point of -21°Cdp or lower under the atmospheric pressure of the storage environment.

[23] The method according to any one of [11] to [19], wherein the package contains a moisture absorbent.

[24] The method according to [23], wherein the amount of the enclosed moisture absorbent satisfies the following Formula (2):

$$\text{WVTR [g/m}^2 \times 24 \text{ hr)]} \times \text{Package surface area [m}^2\text{]/Amount of enclosed moisture absorbent [g]} \leq 0.0030 \qquad (2)$$

(wherein, WVTR represents the water vapor transmission rate of the packaging material at a measurement temperature of 40°C and a measurement humidity of 90%Rh).

[25] The method according to [23] or [24], wherein the moisture absorbent is at least one selected from the group consisting of silica gel, calcium oxide, calcium chloride, calcined diatomaceous earth, synthetic zeolite, a clay-based desiccant, phosphorus pentoxide, magnesium sulfate, copper sulfate, magnesium chloride, cobalt chloride, granular soda lime, and magnesium perchlorate.

[26] The method according to any one of [23] to [25], wherein the moisture absorbent is a sheet-form moisture absorbent.

[27] The method according to any one of [1] to [26], wherein the atmosphere is a dry air having an average dew point of 18°Cdp or lower, or a gas that has an average dew point of 18°Cdp or lower and contains at least one selected from the group consisting of nitrogen, argon, and oxygen.

[28] The method according to any one of [1] to [27], wherein the pressure of the atmosphere is reduced to lower than the atmospheric pressure.

[29] The method according to any one of [1] to [28], wherein the glass fabric is stored in a storage room in which the dew point and the temperature are controlled.

[30] The method according to any one of [1] to [29], wherein the glass fabric has a basis weight (glass fabric mass) in a range of 8 to 25 g/m$^2$.

[31] A glass fabric package, including:

a packaging material; and
a glass fabric housed inside the packaging material,
wherein the glass fabric is configured using glass yarns containing plural filaments as warp yarns and weft yarns,
the glass fabric has a dielectric loss tangent at 10 GHz of 0.00200 or less,
the packaging material is hermetically sealed, and
the packaging material has a water vapor transmission rate of 8 g/(m$^2$ × 24 hr) or lower as measured under the conditions of 40°C and 90%Rh.

[32] The glass fabric package according to [31], wherein the packaging material is a box and/or a film.

[33] The glass fabric package according to [32], wherein

the packaging material is a film, and
the film has a thickness of 50 μm or more.

[34] The glass fabric package according to [32] or [33], wherein

the packaging material is a film, and
the film is an aluminum laminate film.

[35] The glass fabric package according to any one of [32] to [34], wherein

the glass fabric is packaged in a film in the state of a roll wound on a hollow columnar core tube, and
the film has a recess extending from one or both ends of the core tube into a hollow portion, or has an annular shape penetrating the hollow portion of the core tube.

[36] The glass fabric package according to [35], wherein a ratio of the volume occupied by a space constituting the inside of the film is 50% or less with respect to the volume of the hollow portion of the core tube.

[37] The glass fabric package according to [35] or [36], wherein the film has an annular shape penetrating the hollow portion of the core tube.

[38] The glass fabric package according to [35] or [36], wherein the package is configured such that the glass fabric is hermetically sealed from the external environment by the film and the core tube.

[39] The glass fabric package according to any one of [35] to [38], wherein the core tube has a water vapor transmission rate of 8 g/(m$^2$ × 24 hr) or lower as measured under the conditions of 40°C and 90%Rh.

[40] The glass fabric package according to any one of [31] to [39], wherein the inside of the packaging material has a dew point of 18°Cdp or lower.

[41] The glass fabric package according to any one of [31] to [39], wherein the inside of the packaging material has a dew point of 13°Cdp to 18°Cdp.

[42] The glass fabric package according to any one of [31] to [39], wherein the inside of the packaging material has a dew point of -21°Cdp or lower.

[43] The glass fabric package according to any one of [31] to [42], wherein the glass fabric is in the state of a roll.

[44] The glass fabric package according to any one of [31] to [43], wherein a moisture absorbent is enclosed inside the packaging material.

[45] The glass fabric package according to [44], wherein the amount of the enclosed moisture absorbent satisfies the following Formula (2):

$$\text{WVTR [g/(m}^2 \times 24 \text{ hr)]} \times \text{Package surface area [m}^2\text{]/Amount of enclosed moisture absorbent [g]} \leq 0.0030 \qquad (2)$$

(wherein, WVTR represents the water vapor transmission rate of the packaging material at a measurement temperature of 40°C and a measurement humidity of 90%Rh).

[46] The glass fabric package according to [44] or [45], wherein the moisture absorbent is at least one selected from the group consisting of silica gel, calcium oxide, calcium chloride, calcined diatomaceous earth, synthetic zeolite, a clay-based desiccant, phosphorus pentoxide, magnesium sulfate, copper sulfate, magnesium chloride, cobalt chloride, granular soda lime, and magnesium perchlorate.

[47] The glass fabric package according to any one of [44] to [46], wherein the moisture absorbent is in the form of a sheet.

[48] The glass fabric package according to any one of [31] to [47], wherein the inside of the packaging material is filled with a dry air having a dew point of 18°Cdp or lower, or a gas that has a dew point of 18°Cdp or lower and contains at least one selected from the group consisting of nitrogen, argon, and oxygen.

[49] The glass fabric package according to any one of [31] to [48], wherein the pressure inside the packaging material is lower than the atmospheric pressure.

[50] The glass fabric package according to any one of [31] to [49], wherein a silicon (Si) content in the glass yarns is 95.0% by mass to 100% by mass in terms of silicon dioxide ($SiO_2$).

[51] The glass fabric package according to any one of [31] to [50], wherein the glass fabric is treated with a surface treatment agent containing a silane coupling agent.

[52] The glass fabric package according to [51], wherein the surface treatment agent contains a silane coupling agent represented by the following Formula (1):

$$X(R)3\text{-}_nSiY_n \qquad (1)$$

(wherein, X represents an organic functional group having at least one of an amino group or a radical-reactive unsaturated double bond group; each Y independently represents an alkoxy group; n represents an integer of 1 to 3; and each R independently represents a group selected from the group consisting of a methyl group, an ethyl group, and a phenyl group).

[53] The glass fabric package according to [52], wherein the surface treatment agent contains two or more kinds of silane coupling agents that are different in X of Formula (1).

[54] The glass fabric package according to any one of [51] to [53], wherein the surface treatment agent contains two or more kinds of silane coupling agents that are different in molecular weight.

[55] The glass fabric package according to any one of [31] to [54], wherein the dielectric loss tangent at 10 GHz of the glass fabric is 0.00051 to 0.00200.

[56] The glass fabric package according to any one of [31] to [55], wherein the warp yarns and/or the weft yarns of the glass fabric have a thread count in a range of 66 to 120 yarns/inch (= 66 to 120 yarns/25 mm).

[57] The glass fabric package according to any one of [31] to [56], wherein the glass fabric has a basis weight (glass fabric mass) in a range of 8 to 25 $g/m^2$.

[ADVANTAGEOUS EFFECTS OF INVENTION]

According to the present disclosure, a glass fabric storage method and a glass fabric package, which can maintain the dielectric characteristics of a glass fabric having excellent dielectric characteristics, can be provided.

BRIEF DESCRIPTION OF DRAWINGS

FIG. 1 is a schematic drawing that illustrates an axial cross-section of the core tube of the glass fabric package according to the present disclosure.
FIG. 2 is a schematic drawing for describing a method of measuring the water vapor transmission rate of a core tube.

DESCRIPTION OF EMBODIMENTS

Modes for carrying out the present disclosure (hereinafter, referred to as "the present embodiment") will now be described in detail. The present disclosure is not limited to the present embodiment, and various modifications can be made without departing from the gist of the present disclosure. In the present embodiment, those numerical ranges expressed with "to" each include the numerical values stated before and after "to" as a lower limit value and an upper limit value, respectively. In a set of numerical ranges that are stated in a stepwise manner in the present embodiment, the upper limit value or the lower limit value of one numerical range may be replaced with the upper limit value or the lower limit value of other numerical range. In the present embodiment, the upper limit value or the lower limit value of one numerical range may also be replaced with a relevant value indicated in any of Examples. In the present embodiment, the term "step" encompasses not only a discrete step but also a step that cannot be clearly distinguished from other steps, as long as the intended function of the step is achieved.

<<Glass fabric Storage Method>>

The glass fabric storage method of the present disclosure relates to a method of storing a glass fabric, in which the glass fabric is configured using glass yarns containing plural filaments as warp yarns and weft yarns, and has a dielectric loss tangent at 10 GHz of 0.00200 or less. The method of the present disclosure includes storing the glass fabric in an atmosphere that has an average dew point of 18°Cdp or lower and an average temperature of 100°C or lower under the atmospheric pressure of a storage environment. It is conventionally believed that the reaction in which Si-O-Si bonds are cleaved by moisture to generate Si-OH groups is not activated in the temperature range below 100°C; therefore, no special consideration has been given to a glass fabric storage method, and there are cases where the dielectric loss tangent increases with time. In this respect, by employing the method of the present disclosure, the cleavage of Si-O-Si bonds by moisture in a storage environment and the resulting generation of Si-OH groups are inhibited, so that an increase in the dielectric loss tangent of a glass fabric with time can be inhibited. It is noted here that the term "inhibition" used herein does not mean that the dielectric loss tangent does not increase at all, and it is sufficient as long as an increase in the dielectric loss tangent is inhibited to a certain extent.

<Glass fabric>

The glass fabric has a structure that is woven using glass yarns containing plural glass filaments as warp yarns and weft yarns. Examples of the weave structure of the glass fabric include those of plain weave, basket weave, satin weave, and twill weave. Thereamong, a plain weave structure is preferred.

The warp yarns and weft yarns that constitute the glass fabric each independently have a thread count of preferably 10 to 120 yarns/inch (= 10 to 120 yarns/25 mm). A lower limit value of the thread count is more preferably 20 yarns/inch or more, 30 yarns/inch or more, 40 yarns/inch or more, 50 yarns/inch or more, 60 yarns/inch or more, or 66 yarns/inch or more. An upper limit value of the thread count is more preferably 110 yarns/inch or less, or 100 yarns/inch or less. When the thread count is in the above-described range, a glass fabric having a preferred thickness is likely to be obtained. The thread count of the warp yarns and that of the weft yarns may be different.

The glass fabric has a basis weight (glass fabric mass) of preferably 8 to 250 $g/m^2$, more preferably 8 to 100 $g/m^2$,

still more preferably 8 to 80 g/m², yet still more preferably 8 to 50 g/m², particularly preferably 8 to 25 g/m², or 8 to 23.2 g/m². When the basis weight of the glass fabric is in the above-described range, a glass fabric having a preferred thickness is likely to be obtained.

The glass fabric has a thickness of preferably more than 0 $\mu$m but 60 $\mu$m or less. An upper limit value of the thickness of the glass fabric is more preferably 55 $\mu$m or less, still more preferably 50 $\mu$m or less. When the thickness of the glass fabric is in the above-described range, a glass fabric suitable as an insulating material is likely to be obtained. A lower limit value of the thickness of the glass fabric may be more preferably 5 $\mu$m or more, or 10 $\mu$m or more.

<Dielectric Loss Tangent of Glass fabric>

The glass fabric has a dielectric loss tangent at 10 GHz of 0.00200 or less as measured by the method described below in the section of Examples. Since the dielectric loss tangent of such a glass fabric increases with time due to the effect of water contained in a storage environment even at a temperature of 100°C or lower, the increase in the dielectric loss tangent of the glass fabric can be inhibited by controlling the average dew-point temperature of the storage environment of the glass fabric to be 18°Cdp or lower. The term "storage environment" used herein means an atmosphere (gas) with which the glass fabric comes into direct contact.

The dielectric loss tangent at 10 GHz of the glass fabric is preferably 0.00010 to 0.00200. An upper limit value of the dielectric loss tangent is 0.00200 or less, preferably 0.00160 or less, more preferably 0.00120 or less, still more preferably 0.00090 or less, yet still more preferably 0.00070 or less, particularly preferably 0.00050 or less, especially preferably 0.00040 or less. A lower limit value of the dielectric loss tangent is preferably 0.00010 or more, 0.00015 or more, 0.00020 or more, 0.00028 or more, or 0.00030 or more. When the dielectric loss tangent of the glass fabric is in the above-described range, the glass fabric is more likely to be affected by the moisture around the glass fabric in the storage environment; therefore, the effect of inhibiting an increase in the dielectric loss tangent is likely to be obtained.

<Glass Yarns>

The glass yarns constituting the glass fabric are preferably obtained using a low-dielectric glass as a raw material. The low-dielectric glass yarns more preferably have a silicon (Si) content of 95.0% by mass to 100% by mass in terms of $SiO_2$. By using such glass yarns, the dielectric characteristics of the resulting glass fabric can be improved. In addition, in such glass yarns, a marked increase in the dielectric loss tangent of the glass fabric is observed; therefore, the effect of inhibiting an increase in the dielectric loss tangent is likely to be obtained. From the standpoint of improving the dielectric characteristics, the Si content is preferably 99.0% by mass or more, more preferably 99.5% by mass or more, still more preferably 99.9% by mass or more.

The glass filaments constituting the glass yarns have an average filament diameter of preferably 2.5 $\mu$m to 9.0 $\mu$m, more preferably 2.5 $\mu$m to 7.5 $\mu$m, still more preferably 3.5 $\mu$m to 7.0 $\mu$m, yet still more preferably 3.5 $\mu$m to 6.0 $\mu$m, particularly preferably 3.5 $\mu$m to 5.0 $\mu$m. When the filament diameter is equal to or more than the above-described lower limit value, since the breaking strength of the filaments is likely to be ensured, fuzz generation hardly occurs on the resulting glass fabric. Further, when the filament diameter is less than the above-described upper limit value, since the mass of the glass fabric can be prevented from being excessively large, the glass fabric can be easily transported or processed.

<Silane Coupling Agent>

The glass fabric preferably has, on its surface, a surface treatment agent containing a silane coupling agent. More particularly, the glass yarns (including the glass filaments) that constitute the glass fabric is preferably surface-treated with a surface treatment agent containing a silane coupling agent. When the glass fabric has a surface treatment agent, the reactivity with a matrix resin tends to be improved. In addition, since the glass fabric is made less likely to be affected by moisture during storage, an increase in the dielectric loss tangent with time can be more effectively inhibited.

As the silane coupling agent, it is preferred to use, for example, a silane coupling agent represented by the following Formula (1):

$$X(R)_{3-n}SiY_n \qquad (1)$$

{wherein, X represents an organic functional group having at least one of an amino group or a radical-reactive unsaturated double bond group such as a radical-reactive carbon-carbon double bond; each Y independently represents an alkoxy group; n represents an integer of 1 to 3; and R represents a group selected from the group consisting of a methyl group, an ethyl group, and a phenyl group}.

From the standpoint of the reactivity with a matrix resin, X in Formula (1) is more preferably an organic functional group having one or more methacryloxy groups or acryloxy groups.

Regarding Y in the above-described Formula (1), the alkoxy group is preferably an alkoxy group having 1 to 5 carbon atoms (1, 2, 3, 4, or 5 carbon atoms) for stabilization of the glass fabric.

As the surface treatment agent, a silane coupling agent represented by Formula (1) may be used singly, or a mixture of two or more kinds of silane coupling agents that are different in X of Formula (1) may be used. Further, as the silane coupling agent represented by Formula (1), a simple substance such as vinyltrimethoxysilane, 3-methacryloxypropyltrimethoxysilane, acryloxypropyltrimethoxysilane, 3-acryloxypropyltrimethoxysilane, or 5-hexenyltrimethoxysilane, or a mixture of these substances can be used.

The silane coupling agent has a molecular weight of preferably 100 to 600, more preferably 150 to 500, still more preferably 200 to 450. Particularly, it is preferred to use two or more kinds of silane coupling agents that are different in molecular weight. By treating the surfaces of the glass yarns with two or more kinds of silane coupling agents that are different in molecular weight, the density of the treatment agent on the glass surface is increased, so that the reactivity with a matrix resin tends to be further improved.

The silane coupling agent is preferably nonionic since such a silane coupling agent hardly hinders the reactivity with a resin. Among nonionic silane coupling agents, a silane coupling agent having at least one group selected from the group consisting of a vinyl group, a methacryloxy group, and an acryloxy group is preferred, and a silane coupling agent having at least one methacryloxy group or acryloxy group is particularly preferred. By not hindering reactivity with a resin, the heat resistance and the reliability of a printed circuit board can be improved.

<Ignition Loss>

The glass fabric has an ignition loss of preferably 0.01% by mass or more but less than 2.0% by mass, more preferably 0.01% by mass or more but less than 1.5% by mass, still more preferably 0.02% by mass or more but less than 1.0% by mass, yet still more preferably 0.03% by mass or more but less than 0.8% by mass, particularly preferably 0.03% by mass or more but less than 0.3% by mass. When the ignition loss is in the above-described range, a glass fabric exhibiting a low dielectric loss tangent is likely to be obtained. It is noted here that the ignition loss is measured in accordance with JIS R3420.

<Storage of Glass fabric>

The glass fabric storage method includes storing the glass fabric in an atmosphere that has an average dew point of 18°Cdp or lower and an average temperature of 100°C or lower under the atmospheric pressure of a storage environment. The term "storage environment" used herein means an atmosphere with which the glass fabric comes into direct contact. By managing the storage environment of the glass fabric in the above-described range, an increase in the dielectric loss tangent of the glass fabric with time, which is caused by water existing in the storage environment, can be inhibited.

The storage period of the glass fabric, i.e., the period in which the storage environment according to the present disclosure is maintained, is not particularly limited; however, it is preferably 30 days to 5 years from the standpoint of the time required for transporting the glass fabric, improvement in the supply stability, and the like. A lower limit value of the storage period is preferably 30 days or longer, more preferably 90 days or longer, still more preferably 180 days or longer, yet still more preferably 365 days or longer, particularly preferably 730 days or longer. Further, from the standpoint of reduction in the storage cost and the like, an upper limit value of the storage period of the glass fabric is preferably 5 years or shorter, more preferably 3 years or shorter. When the storage period is in the above-described range, the effects of maintaining the storage environment can be sufficiently obtained. The longer the storage period, the more pronounced the effect of inhibiting an increase in the dielectric loss tangent can be.

<Average Dew Point in Storage Environment of Glass fabric>

In the glass fabric storage method, the average dew point of the storage environment of the glass fabric under the atmospheric pressure is 18°Cdp or lower. The average dew point refers to an average dew point during the storage period. Preferably, the dew point of the storage environment is controlled such that it is maintained at 18°Cdp or lower over the entire storage period. When the average dew point is 18°Cdp or lower, an increase in the dielectric loss tangent of the glass fabric with time can be inhibited. The average dew point is preferably -50°Cdp to 18°Cdp. A lower limit value of the average dew point may be more preferably -40°Cdp or higher, -32°Cdp or higher, -30°Cdp or higher, -20°Cdp or higher, -10°Cdp or higher, 0°Cdp or higher, 10°Cdp or higher, or 13°Cdp or higher. An upper limit value of the average dew point that can be arbitrarily combined with the above-described lower limit value may be more preferably 15°Cdp or lower, 10°Cdp or lower, 5°Cdp or lower, 0°Cdp or lower, -5°Cdp or lower, -10°Cdp or lower, -15°Cdp or lower, -20°Cdp or lower, or -21°Cdp or lower.

In the glass fabric storage method, as long as the average dew point is 18°Cdp or lower, the dew point may exceed 18°Cdp during a part of the storage period. Preferably, the dew point of the storage environment is controlled such that it is maintained at 18°Cdp or lower over the entire storage period. As a method of controlling the average dew point in the above-described range, any known humidity control method, humidity control medium, humidity control mechanism, and humidity control device can be used. Examples of the method include: (1) use of a moisture absorbent; (2) replacement of the ambient atmosphere with a gas (e.g., dry gas) having a prescribed moisture content; (3) dehumidification of the ambient atmosphere by utilizing dew condensation at a low temperature; (4) adjustment of the ambient atmosphere to a prescribed moisture content by reducing the pressure; and (5) a combination of these methods.

As long as the average dew point is controlled in the above-described range, the dew point can be controlled continuously or intermittently (regularly or irregularly) in an open system or a closed system. For example, the above-described control of (1) to (5) may be performed continuously in a closed system (e.g., in a hermetically sealed packaging material (packing material)) or intermittently in a closed system (e.g., only during seasons or weather days when the dew point is likely to rise), or the change in the dew point around the glass fabric may be continuously controlled in an open system. In the case of maintaining the dew point by continuous humidity control, it is preferred to use a moisture absorbent, dry gas replacement, a dehumidifier, or the like.

<Moisture Absorbent>

In the case of using a moisture absorbent for controlling the dew point, the type of the moisture absorbent is not limited as long as the average dew point can be controlled in the above-described range. From the standpoint of hygroscopicity, the moisture absorbent is preferably, for example, at least one selected from the group consisting of silica gel, calcium oxide, calcium chloride, calcined diatomaceous earth, synthetic zeolite, a clay-based desiccant, phosphorus pentoxide, magnesium sulfate, copper sulfate, magnesium chloride, cobalt chloride, granular soda lime, and magnesium perchlorate. Particularly, the moisture absorbent is preferably at least one selected from the group consisting of silica gel, calcium oxide, calcium chloride, and calcined diatomaceous earth. Further, from the standpoint of occupied space and packaging (packing) form, it is preferred to use a sheet-form moisture absorbent.

The amount of the moisture absorbent to be used is not limited as long as the average dew point can be controlled in the above-described range; however, it is preferred to use the moisture absorbent in an appropriate amount in accordance with the hygroscopicity (moisture absorption amount and moisture absorption time) of the moisture absorbent, the storage period, and the like. With regard to the moisture absorption amount, it is preferred to use the moisture absorbent in an amount that is equal to or more than enough. In other words, the maximum amount of moisture that can be absorbed by the moisture absorbent is preferably greater than the amount of moisture in the atmosphere. Alternatively, by periodically replacing the moisture absorbent, the conditions of the storage environment of the glass fabric can be easily maintained constant.

The longer the storage period, the more important the amount of the moisture absorbent to be used becomes. As long as the amount of the moisture absorbent is appropriate, the dew point of the storage environment is maintained during a long storage period, and an increase in the dielectric loss tangent is likely to be inhibited. The dew point of the storage environment, i.e., the amount of water vapor existing inside a package, is affected by not only the water vapor transmission rate of the packaging material and the surface area of the package, but also the material of the packaging material, the external temperature and humidity of the storage environment, as well as the type, shape, amount, and the like of the moisture absorbent; therefore, it is difficult to construct a package by estimating and enclosing an appropriate amount of the moisture absorbent from the start of storage. Particularly, the water vapor transmission rate of the packaging material changes due to the effect of the temperature and humidity of the surrounding environment, and the degree of the change varies depending on the material of the packaging material, making it more difficult to enclose an appropriate amount of the moisture absorbent. However, in the production of a package containing a moisture absorbent, by using the below-described equations, the water vapor transmission rate of the packaging material, the surface area of the package, and the amount of the moisture absorbent can be controlled in prescribed ranges, so that the rate at which the dew point inside the storage environment changes with respect to the external environment (dew point change rate) can be easily controlled. First, the amount of water vapor that can penetrate into the package is expressed by: Water vapor transmission rate (WVTR) $\times$ Package surface area $\times$ Number of days of storage. Taking into consideration that the WVTR changes due to the effect of the temperature and humidity of the surrounding environment, the amount of water vapor that can penetrate into the package can be simply expressed by the following equation, wherein WVTR represents the water vapor transmission rate at a measurement temperature of 40°C and a measurement humidity of 90%Rh (dew point: about 38°Cdp):

(WVTR $[g/(m^2 \times 24\ hr)]$ $\times$ Package surface area $[m^2]$) $\times$ (Storage environment external dew point $[°Cdp]/38$) $\times$ (Storage environment external temperature $[°C]/40$) $\times$ Number of days of storage

Next, the maximum amount of moisture that can be removed from the inside of the package by the moisture absorbent is affected by the type, shape, amount, and the like of the moisture absorbent; however, it can be simply expressed by the following equation:

$$0.26 \times \text{Amount of enclosed moisture absorbent [g]}$$

In this case, it is preferred that the amount of water vapor that can penetrate into the package be equal to or less than the maximum amount of moisture that can be removed from the inside of the package by the moisture absorbent, i.e., the following equation be satisfied:

(WVTR [g/(m² × 24 hr)] × Package surface area [m²]) × (Storage environment external dew point [°Cdp]/38) × (Storage environment external temperature [°C]/40) × Number of days of storage ≤ 0.26 × Amount of enclosed moisture absorbent [g]

Further, when the external environment temperature is 30°C, the storage environment external dew point is 24°Cdp, and the number of days of storage is 180 days in the above equation, it is preferred to adjust the amount of the moisture absorbent such that the value calculated by the following Formula (2) is 0.0030 or less. This enables the enclosure of an appropriate amount of the moisture absorbent in accordance with the configuration of the package, making it easier to control a change in the dew point of the storage environment.

$$\text{WVTR [g/(m}^2 \times 24 \text{ hr)]} \times \text{Package surface area [m}^2\text{]/Amount of enclosed moisture absorbent [g]}$$

$$(2)$$

It is noted here that, when the package is composed of two or more packaging materials that are different in water vapor transmission rate, "WVTR [g/(m² × 24 hr)] × Package surface area [m²]" in Formula (2) is a sum of the values of "WVTR [g/(m² × 24 hr)] × Package surface area [m²]" calculated for the respective packaging materials. The value calculated by Formula (2) is more preferably 0.0023 or less, still more preferably 0.0012 or less, particularly preferably 0.0005 or less. The value calculated by Formula (2) may be 0.

In the present disclosure, the dew point change rate inside the package containing the moisture absorbent therein is defined by the following equation:

Dew point change rate = (Dew point (°Cdp) of storage environment after 365 days of storage - Initial dew point (°Cdp) of storage environment)/(Average dew point (°Cdp) of external environment of packaging material - Dew point (°Cdp) of storage environment after 365 days of storage).

A smaller value of the dew point change rate inside the package indicates a greater effect of controlling the storage environment by a packaging material and a desiccant. The dew point change rate inside the package is evaluated by the above equation, and the dew point change rate inside the package after 365 days from the start of the storage of the glass fabric is preferably 3.0 or less, more preferably 1.0 or less, still more preferably 0.50 or less, yet still more preferably 0.30 or less, particularly preferably 0.10 or less, or 0.02 or less. The dew point change rate may be a negative value.

<Dry Gas>

In the case of using a dry gas for controlling the dew point, it is preferred to use a gas (dry gas) having a dew-point temperature of 18°Cdp or lower. With such a dry gas, it is easy to control the storage environment of the glass fabric to have an atmosphere having an average dew point of 18°Cdp or lower. The dew-point temperature of the dry gas is preferably -60°Cdp to 18°Cdp. A lower limit value of the dew-point temperature of the dry gas may be more preferably -50°Cdp or higher, -40°Cdp or higher, or -30°Cdp or higher. An upper limit value of the dew-point temperature of the dry gas may be more preferably 15°Cdp or lower, 10°Cdp or lower, 5°Cdp or lower, 0°Cdp or lower, -5°Cdp or lower, -10°Cdp or lower, -15°Cdp or lower, -20°Cdp or lower, or -21°Cdp or lower.

As the dry gas, for example, a dry air having the above-described dew-point temperature range, or a gas that has the above-described dew-point temperature range and contains at least one selected from the group consisting of nitrogen, argon, and oxygen can be utilized. It is preferred to use the dry air because of its ease of handling.

In the case of using a dehumidifier for controlling the dew point, the dehumidifier is not limited as long as it can control the average dew point in the above-described range, and examples thereof include a compressor-type dehumidifier that utilizes dew condensation at a low temperature, and a desiccant-type (zeolite-type) dehumidifier that repeatedly regenerates a dehumidifying agent with heat.

For the inhibition a change in dew point with time, it is preferred to store the glass fabric in a hermetically sealed storage environment. As a sealing method, one that inhibits the flow of moisture into the storage environment is particularly preferred. A specific storage form will be described below.

<Average Temperature in Storage Environment of Glass fabric>

The glass fabric is stored in an atmosphere in which the average temperature of the storage environment of the glass fabric is 100°C or lower. When the average temperature is 100°C or lower, an increase in the dielectric loss tangent of the glass fabric with time can be effectively inhibited. The average temperature of the glass fabric storage environment during storage of the glass fabric is preferably 0°C to 100°C. An upper limit value of the average temperature is preferably 50°C or lower, more preferably 40°C or lower, still more preferably 35°C or lower, yet still more preferably 30°C or lower, particularly preferably 25°C or lower. A lower limit value of the average temperature may be preferably 10°C or higher, or 20°C or higher.

Preferably, the temperature of the storage environment is controlled such that it is maintained at 100°C or lower over the entire storage period. The temperature is controlled to be more preferably 40°C or lower, still more preferably 35°C or lower, yet still more preferably 30°C or lower, particularly preferably 30°C or lower, over the entire storage period. Preferably, the temperature of the storage environment is controlled to be 0°C or higher, 10°C or higher, or 20°C or higher, over the entire storage period.

<Pressure in Storage Environment of Glass fabric>

In the case of reducing the pressure to control the dew point, it is preferred to control the pressure to be a reduced pressure of lower than the atmospheric pressure ($10^5$ Pa). A method of controlling the air pressure in the storage environment of the glass fabric to be a reduced pressure of lower than the atmospheric pressure is not limited as long as it can control the average dew point in the above-described range, and any known depressurization control method, depressurization control medium, depressurization control mechanism, depressurization control device and the like, examples of which include a vacuum pump, can be used.

The air pressure can be maintained by any known method as long as the storage environment of the glass fabric is maintained under a reduced pressure of lower than the atmospheric pressure. For example, the storage environment may be depressurized continuously or intermittently (regularly or irregularly), or the glass fabric may be hermetically sealed in a depressurized packaging material (packing material) to inhibit a change in air pressure. The air pressure around the glass fabric at the time of storing or packaging (packing) the glass fabric is preferably $10^4$ Pa or lower, more preferably $10^3$ Pa or lower. A lower limit value of this air pressure is not particularly limited; however, it is preferably higher than 0 Pa, or 10 Pa or higher.

<Storage Form>

A storage form of the glass fabric is not particularly limited as long as the above-described storage environment is maintained, and examples thereof include storage in a room such as a storage room, storage in a package (packed body) that is packaged (packed) with a packaging material (packing material), and a combination thereof. In the present disclosure, the terms "packaging" and "packing" are used interchangeably as a term that means to wrap an object of interest. Examples of the packaging material include a box and a film. In each case, it is preferred to control the storage environment, i.e., the average dew point, the temperature, and optionally the pressure of the atmosphere with which the glass fabric comes into direct contact, to be in the above-described respective ranges. Further, from the standpoint of avoiding wrinkling and the like of the glass fabric and reducing the storage space, it is preferred to store the glass fabric in the state of a roll. When the glass fabric is in the state of a roll, it is easy to minimize the area of contact between the storage environment and the external environment and to reduce the internal air volume at the time of packaging, so that an increase in the dielectric loss tangent with time can be more effectively inhibited.

From the standpoint of making it easier to maintain the average dew point and the temperature, the storage room and the packaging material in which the glass fabric is to be stored preferably have sealing performance. In addition to or instead of having high sealing performance, the storage room and the packaging material are preferably configured to be dehumidified such that the average dew point of the inside (storage environment) is maintained at 18°Cdp or lower. In other words, the storage room and the package themselves are preferably equipped with the above-described dew point control means. The average dew point of the inside (storage environment) is preferably -50°Cdp to 18°Cdp. A lower limit value of the average dew point of the inside (storage environment) may be more preferably -40°Cdp or higher, -32°Cdp or higher, -30°Cdp or higher, -20°Cdp or higher, -10°Cdp or higher, 0°Cdp or higher, 10°Cdp or higher, or 13°Cdp or higher. An upper limit value of the average dew point of the inside (storage environment) that can be arbitrarily combined with the above-described lower limit value may be more preferably 15°Cdp or lower, 10°Cdp or lower, 5°Cdp or lower, 0°Cdp or lower, -5°Cdp or lower, -10°Cdp or lower, -15°Cdp or lower, -20°Cdp or lower, or -21°Cdp or lower.

<Packaging Material>

From the standpoint of the ease of maintaining the dew point of the storage environment, the water vapor transmission rate of the packaging material (e.g., a box or a film) at a measurement temperature of 40°C and a measurement humidity of 90%Rh is preferably 8 g/(m$^2$ × 24 hr) or lower, more preferably 4 g/(m$^2$ × 24 hr) or lower, still more preferably 2 g/(m$^2$ × 24 hr) or lower, yet still more preferably 1 g/(m$^2$ × 24 hr) or lower, particularly preferably 0.3 g/(m$^2$ × 24 hr) or lower, especially preferably 0.1 g/(m$^2$ × 24 hr) or lower. When the water vapor transmission rate of the packaging material is 8 g/(m$^2$ × 24 hr) or lower, the amount of moisture penetrating through the packaging material is small, so that the dew point can be easily controlled. A lower limit value of the water vapor transmission rate is 0 g/(m$^2$ × 24 hr) or higher, for example, higher than 0 g/(m$^2$ × 24 hr).

When the glass fabric in the state of a roll is stored as a package in which the glass fabric is packaged in a box and/or a film-like packaging material, it is preferred to enclose a moisture absorbent in the package. It is more preferred to enclose the moisture absorbent between the roll and the packaging material. By this, not only the moisture inside the package but also the moisture that has penetrated the box and/or the film-like packaging material and flowed into the storage environment during storage can be absorbed.

From the standpoint of making it easier to maintain the dew point and the temperature, it is preferred that the glass fabric be packaged in a box and/or a film-like packaging material, and that openings thereof be hermetically sealed. The sealing can be performed by, for example, thermocompression-bonding the opening. It is noted here that the term "hermetically sealed" means a state in which the openings are tightly closed without any gaps and the temperature, dew point, and air pressure in the storage environment of the glass fabric can each be controlled to be equal to or lower than a certain standard. Further, in a hermetically sealed state, sealing is preferably made in such a manner to prevent the intrusion of solids, liquids, and gases. By inhibiting the intrusion of solids, liquids, and gases, the effect of inhibiting an increase in the dielectric loss tangent of the glass fabric is likely to be obtained.

In the case of using a box as a packaging material, the box is not limited as long as its water vapor transmission rate satisfies the above-described range, and examples thereof include boxes whose openings can be hermetically sealed, and which are made of metal, plastic, wood, cardboard, or a combination thereof. From the standpoint of the ease of satisfying the above-described range of the water vapor transmission rate and the ease of reuse, the box is preferably made of metal or plastic, more preferably made of metal. It is noted here that the term "box" used herein refers to a movable container that is hermetically sealable for insulating the glass fabric from the ambient air. One or more pieces of glass fabric may be stored in the box.

In the case of using a film as a packaging material, the film is not limited as long as its water vapor transmission rate satisfies the above-described range, and examples thereof include ceramic vapor-deposited films, aluminum vapor-deposited films, aluminum foils, and aluminum laminate films. From the standpoint of the ease of satisfying the above-described range of the water vapor transmission rate, an aluminum foil or an aluminum laminate film is preferred. The film has a thickness of preferably 30 μm to 500 μm. A lower limit value of the thickness of the film is preferably 50 μm or more, more preferably 70 μm or more, still more preferably 80 μm or more, particularly preferably 90 μm or more. When the thickness is 50 μm or more, the water vapor transmission rate is likely to be low, and the generation of pinholes caused by wrinkles, scratches, and the like is unlikely to occur. An upper limit value of the thickness of the film is preferably 400 μm or less, 300 μm or less, 200 μm or less, or 170 μm or less.

The glass fabric is preferably stored as a package in which the glass fabric is packaged in a film in the state of a roll wound on a hollow columnar core tube having a columnar cavity (hollow portion) in the center (hereinafter, also simply referred to as "glass fabric roll"). During the handling such as transport of the glass fabric roll, a support rod is often inserted into the hollow portion of the roll core tube to lift the roll. From the standpoint of maintaining the above-described storage environment, it is preferred to package the glass fabric roll with a packaging material having a minimum surface area; however, in this method, the hollow portion of the core tube cannot be utilized during the handling of the glass fabric roll, making the handling complicated. Therefore, from the standpoint of the ease of handling the glass fabric roll, the glass fabric roll is preferably configured such that the film-like packaging material has a recess extending from one or both ends of the core tube into the hollow portion, or has an annular shape (donut shape) penetrating through the hollow portion of the core tube, and thereby allows a support rod to be inserted into the hollow portion of the core tube. Alternatively, from the ease of handling the glass fabric roll, the glass fabric is preferably hermetically sealed from the external environment by the film-like packaging material and the core tube.

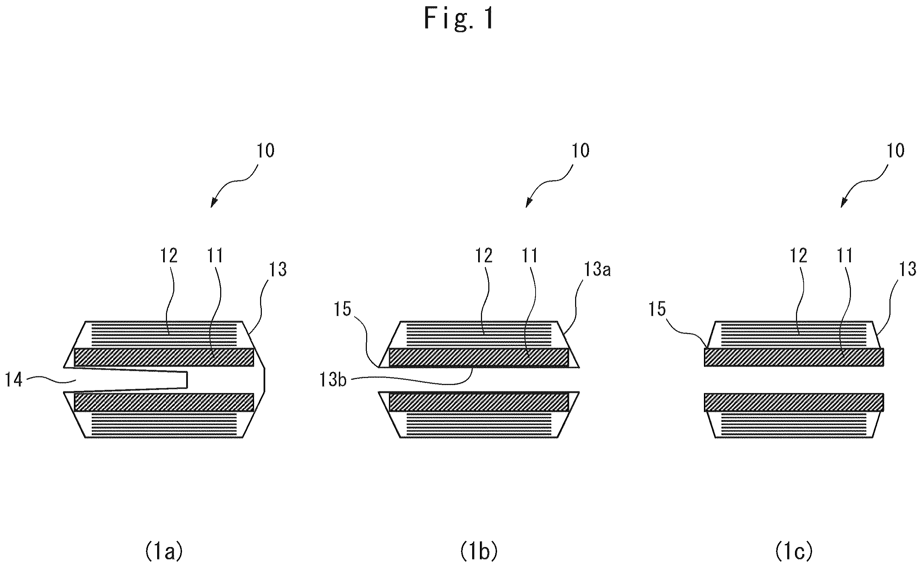

FIG. 1 is a schematic drawing that illustrates an axial cross-section of the core tube of the glass fabric package according to the present disclosure. For example, as schematically illustrated in FIG. 1(1a), a glass fabric package 10 may have a hollow columnar core tube 11, a glass fabric 12 wound on the core tube 11, and a film 13 surrounding the entirety of the core tube 11 and the glass fabric 12. The film 13 has a recess 14 extending from one end of the core tube 11 toward the inside of a hollow portion, and is thereby configured such that a support rod can be inserted into the hollow portion. Further, as schematically illustrated in FIG. 1(1b), the glass fabric package 10 may have an outer film 13a covering the outside of the glass fabric 12 and a hollow inner film 13b penetrating the inside of the hollow portion of the core tube 11, and the outer film 13a and the inner film 14b may be joined at joints 15 by thermocompression bonding or the like. As a result, the films 13a and 13b integrally have an annular shape that surrounds the entirety of the core tube 11 and the glass fabric 12. When the packaging material has an annular shape, the external environment penetrates the hollow portion of the core tube; therefore, a support rod can be inserted through the hollow portion from both sides of the package, so that the ease of handling is further improved. The joining of the films is not particularly limited as long as openings can be tightly adhered to eliminate gaps and, for example, a method of attaching the openings by way of thermocompression bonding, a tape, an adhesive, or the like may be employed. Alternatively, as schematically illustrated in FIG. 1(1c), the film 13 covering the outside of the glass fabric 12 may be joined with the core tube 11 at joints 15 located on the exposed outer surface of the core tube 11. By this, the glass fabric 12 is hermetically sealed from the external environment by the film 13 and the core tube 11. In this form, since the external environment penetrates the hollow portion of the core tube, not only a support rod can be inserted through the hollow portion from both sides of the package but also there is no film inside the core tube; therefore, the generation of pinholes is unlikely to occur when inserting and removing the support rod or when lifting and transporting the roll, so that the ease of handling is further improved. The joining of the film-like packaging material and the core tube is not particularly limited as long as openings can be tightly adhered to eliminate gaps and, for example, a method of attaching the openings with a tape, an adhesive, or the like may be employed.

From the standpoint of the ease of inserting a support rod, a ratio of the volume occupied by a space constituting the inside of the film-like package is preferably 70% or less, more preferably 50% or less, still more preferably 30% or less, particularly preferably 10% or less, with respect to the volume of the hollow portion of the core tube. A lower limit value of the volume of the inside of the package with respect to the volume of the hollow portion may be 0% or more. For example, in the form schematically illustrated in FIG. 1(1c), the volume of the inside of the package with respect to the volume of the hollow portion is 0%.

<Core Tube>

From the standpoint of the ease of handling during transport and post-processing, the core tube on which the rolled glass fabric is wound has a columnar cavity (hollow portion) in the center. Examples of the material of the core tube include paper, resins, fiber-reinforced plastics (hereinafter, abbreviated as "FRP"), and metals and, from the standpoint of preventing the contamination of the glass fabric with a metallic foreign matter, the core tube is preferably made of paper, a resin, or an FRP. Generally, from the standpoint of the balance between weight and strength, the core tube has a certain degree of thickness. Particularly, while the weight of the glass fabric itself is large in a glass fabric roll, a core tube of a small diameter puts a strong bending force on the glass fabric; therefore, the core tube has been made thicker and lighter. Since the core tube is thicker than films and the like, the transmission of water vapor through the core tube has not been considered. However, as a result of investigation, it was discovered that water vapor can pass through even a core tube made of paper, a resin, or an FRP because of features that, for example, the overall thickness of the core tube is small for weight reduction of the core tube, the core tube is composed of a combination of thin materials, and there are joints for combining the materials. Therefore, it is preferred to use a core tube having a low water vapor transmission rate.

From the standpoint of the ease of controlling the amount of moisture inside the packaging material, the water vapor transmission rate of the core tube measured under the conditions of 40°C and 90%Rh is preferably 8 g/(m$^2$ × 24 hr) or lower, more preferably 4 g/(m$^2$ × 24 hr) or lower, still more preferably 2 g/(m$^2$ × 24 hr) or lower, yet still more preferably 1 g/(m$^2$ × 24 hr) or lower, particularly preferably 0.3 g/(m$^2$ × 24 hr) or lower, especially preferably 0.1 g/(m$^2$ × 24 hr) or lower. When the water vapor transmission rate of the core tube is 8 g/(m$^2$ × 24 hr) or lower, the amount of moisture penetrating through the core tube is small, so that the dew point can be easily controlled. A lower limit value of the water vapor transmission rate is 0 g/(m$^2$ × 24 hr) or higher, for example, higher than 0 g/(m$^2$ × 24 hr). Examples of a method of controlling the water vapor transmission rate of the core tube to be in the above-described range include: applying a moisture-proof paint to the core tube, performing vapor-deposition plating; increasing the thickness of the core tube; using a material having a low water vapor transmission rate for the core tube; and wrapping the core tube with a film having a low water vapor transmission rate.

<Package Surface Area>

The smaller the surface area of the glass fabric package packaged with the packaging material, the easier it is to maintain the storage environment. The package surface area is not limited as long as the dew point of the storage environment of the package satisfies the range of the present disclosure; however, it is preferably 10 m$^2$ or less, more preferably 7 m$^2$ or less, still more preferably 5 m$^2$ or less, yet still more preferably 4 m$^2$ or less. A lower limit value of the package surface area is not limited as long as the package can hermetically seal the glass fabric from the external environment. The term "package surface area" used herein means, for example, the area of a film when the glass fabric is hermetically sealed from the external environment by the film, the area of the outer surface of a box when the glass fabric is hermetically sealed from the external environment by the box, or a sum of the area of a film and the outer surface area of a core tube separating the external environment and the storage environment when the glass fabric is hermetically sealed from the external environment by the film and the core tube.

<Storage Room>

The storage room for storing the glass fabric refers to an indoor space in which the dew point and the temperature are controlled. From the standpoint of space saving, such an indoor space in which plural glass fabrics in the state of rolls can be stored together is preferred. The glass fabric in the state of a roll may be stored in the storage room as a package in which the glass fabric is packaged in a box and/or a film-like packaging material.

<<Production Method of Glass Fabric>>

A method of producing a glass fabric used in the glass fabric storage method of the present disclosure includes the step of weaving glass yarns containing plural glass filaments as warp yarns and weft yarns to obtain a glass fabric. The method of producing a glass fabric may further include: the step of heat-deoiling (heat-cleaning) the glass yarns or the glass fabric; and the step of treating the glass yarns or the glass fabric with a surface treatment agent. If desired, the method of producing a glass fabric may further include at least one of the step of opening the filaments of the glass fabric or the step of packaging the glass fabric with a packaging material (e.g., a box or a film).

<Weaving Step>

A weaving method is not particularly limited as long as the weft yarns and the warp yarns can be woven into a prescribed weave structure. Preferred configuration and composition of the glass yarns to be used as well as the weave structure are as described above.

<Heat-Deoiling Step>

The heat-deoiling step can be performed on the glass yarns, and can also be performed on the thus woven glass fabric. In other words, the step of weaving glass yarns to obtain a glass fabric may be performed before, during, or after the heat-deoiling step. For the heat-deoiling step, either of the following methods can be employed: (1) a method of heat-deoiling the glass yarns or the glass fabric (hereinafter, also simply referred to as "glass" in this step) at a relatively low temperature (e.g., lower than 600°C) for a long period (e.g., 24 hours or longer); and (2) a method of heat-deoiling the glass at a relatively high temperature (e.g., 600°C to 1,600°C) for a long period or a short period (e.g., shorter than 24 hours). From the standpoint of obtaining a glass fabric having excellent dielectric loss tangent, it is preferred to employ the method (2). Particularly, a glass fabric composed of glass yarns having a Si content of 95.0% by mass to 100% by mass in terms of $SiO_2$ may be heat-deoiled at a temperature of 600°C or higher. By this, the dielectric loss tangent of the glass fabric can be easily reduced.

In the case of (1) in which heating is performed at a relatively low temperature, the heat-deoiling temperature is preferably 100°C to 500°C, more preferably 250°C to 450°C, still more preferably 350°C to 450°C. Further, in the case of (1), the heating time of the heat-deoiling can be selected as appropriate and is, for example, preferably 24 hours to 300 hours, more preferably 48 hours to 200 hours, still more preferably 72 hours to 150 hours. When the temperature and the time of the heat-deoiling are a combination of the above-described ranges, an adhesive adhering to the glass can be easily and sufficiently removed.

On the other hand, in the case of (2) in which heating is performed at a relatively high temperature, the heat-deoiling temperature is preferably 600°C to 1,500°C, more preferably 800°C to 1,300°C, still more preferably 900°C to 1,100°C. When the heat-deoiling temperature is 600°C or higher, organic matter such as residues of an adhesive adhering to the glass can be easily and sufficiently removed; therefore, the dielectric loss tangent of the glass fabric can be easily reduced, and the removal time can be shortened. Meanwhile, when the heat-deoiling temperature is 1,500°C or lower, the devitrification phenomenon of the glass is likely to be inhibited, so that a reduction in the strength of the glass fabric can be effectively prevented. Further, in the case of (2), the heating time of the heat-deoiling can be selected as appropriate and is, for example, preferably 3 seconds to 72 hours, more preferably 3 seconds to 12 hours, still more preferably 3 seconds to 2 hours, particularly preferably 3 seconds to 10 minutes, especially preferably 3 seconds to 300 seconds.

As a heating means for the heat-deoiling, any known heating method, heating medium, heating mechanism, heating device, heating component, and the like can be used as long as the heat-deoiling temperature can be suitably controlled. For example, (1) a method of heating the glass in a heating furnace, (2) a method of bringing the glass into contact with a heating part, or (3) a method of applying high-temperature steam to the glass may be employed. The heating can be performed sequentially or continuously in a closed system or an open system, or in a combination of a closed system and an open system.

In the case of a closed system, from the standpoint of achieving suitable heating by the heating means, it is preferred to place the glass in a heating furnace and, in this case, from the standpoint of storage space and heating range, it is preferred to heat the glass fabric while storing it in the state of a roll. Further, from the standpoint of, for example, increasing the efficiency of the removal of organic matter and shortening the time required for the removal of organic matter, it is also preferred to heat the glass while transporting it in a heating furnace.

In the case of an open system, from the standpoint of the area to be heated, it is preferred to heat the glass while transporting it in a roll-to-roll manner. As described above, the heating temperature is preferably 600°C to 1,500°C, more preferably 800°C to 1,300°C, still more preferably 900°C to 1,100°C. The glass can be transported by, for example, an unwinding mechanism and a winding mechanism.

As a heating means of the heating furnace, various heating means such as electric heaters and burners can be used, and a gas-type single radiant tube burner or an electric heater is preferred. The heating may be performed using a combination of plural means.

From the standpoint of heating efficiency, the heating furnace is preferably equipped with a means for discharging a gas generated in the heating furnace, and/or an air circulation means. The gas discharging means may be, for example, a nozzle, a gas pipe, a small hole, or a gas vent valve. The air circulation means may be, for example, a fan or an air conditioner.

The heating furnace may be of either a batch system which can house the glass (e.g., a roll of the glass fabric) and heat the glass at a prescribed atmosphere temperature, or a continuous system which can heat the glass while continuously passing it through the heating furnace (e.g., heat the glass while transporting it in a roll-to-roll manner). In order to efficiently remove organic matter adhering to the glass surface, the heating furnace is preferably a continuous system.

As a method of heating the glass, the above-described heating furnace may be used; however, from the standpoint of attaining a low running cost, the glass may be heated by being brought into contact with a member heated to a prescribed temperature.

The shape of this contact member is not particularly limited as long as the heating can be performed while suitably controlling the heat-deoiling temperature; however, from standpoint of the ease of transporting the glass, a roll shape is preferred (heating roller system). As a roll-shaped member capable of heating the glass, a roller heated by an induction heating system, which can be used in high-temperature ranges and has a relatively small temperature variation in the width direction, is preferred. When the glass is heated with such a contact member, it is believed that the temperature of the contact member and the surface temperature of the glass are substantially the same.

As the glass is continuously heated, a carbide may adhere to the heating roller. In order to remove the carbide adhering to the heating roller, the above-described heating roller system is preferably provided with a mechanism for removing adhered foreign matter, such as a blade.

<Surface Treatment Step>

The surface treatment step can be performed on the glass yarns, and can also be performed on the woven glass fabric. In other words, the step of weaving glass yarns to obtain a glass fabric may be performed before, during, or after the surface treatment step. The surface treatment step may include, for example, the coating step of adhering a silane coupling agent to the surfaces of the glass yarns or the glass fabric (hereinafter, also simply referred to as "glass" in this step) using a treatment solution having a concentration of 0.1% by mass to 0.5% by mass. The surface treatment step may further include the fixation step of fixing the silane coupling agent onto the surface of the glass by heat-drying. This makes it easy to suitably treat the surface of the glass.

Examples of a method of applying the treatment solution to the glass in the coating step include: (a) a method of immersing or passing the glass in the treatment solution stored in a bath (hereinafter, referred to as "immersion method"); and (b) a method of applying the treatment solution to the glass using a roll coater, a die coater, a gravure coater, or the like. When employing the immersion method, it is preferred to select the immersion time of the glass in the treatment solution to be 0.5 seconds to 1 minute. Further, when employing the immersion method, the glass can be passed through the treatment solution at a transport speed of 10 m/min to 50 m/min while applying a prescribed tension (e.g., 100 N to 250 N) to the glass. After applying the treatment solution to the glass, a solvent contained in the treatment solution can be heat-dried with hot air, electromagnetic waves, or the like. In order to make it easier to uniformly apply the surface treatment agent to the glass surface, it is preferred to immerse the glass fabric in the surface treatment solution and subsequently squeeze the glass fabric with a rubber roller at a constant pressure.

The concentration of the surface treatment agent in the treatment solution is preferably 0.1% by mass to 0.5% by mass, more preferably 0.1% by mass to 0.45% by mass, still more preferably 0.1% by mass to 0.4% by mass, based on a total mass of the treatment solution. This makes it easier to suitably treat the surface of the glass.

In the fixation step, the heat-drying temperature is preferably 80°C or higher, more preferably 90°C or higher, such that the reaction between the silane coupling agent and the glass sufficiently proceeds. Further, in order to inhibit the deterioration of an organic functional group contained in the silane coupling agent, the heat-drying temperature is preferably 300°C or lower, more preferably 180°C or lower.

<Opening Filament Step>

The method of producing a glass fabric may further include the step of opening the filaments of the glass fabric. As an opening method in the step of opening the filaments of the glass fabric, for example, a method of opening the glass fabric with spray water (high-pressure water opening), a vibro-washer, ultrasonic water, a mangle, or the like can be employed. In many cases, the composition of the glass fabric does not usually change before and after the opening.

<Packaging Step>

The method of producing a glass fabric may further include the step of packaging the glass fabric with a packaging material, such as a film or a box. This makes it easier to maintain the storage environment of the glass fabric. The details of the packaging material have been described above; therefore, the descriptions thereof are omitted here. In the packaging step, it is preferred to control in advance the dew point and the temperature as well as optionally the pressure and the like of the environment coming into direct contact with the glass fabric to the storage environment of the present disclosure, before packaging the glass fabric. The storage environment has been described above, and the description thereof is thus omitted here. As a sealing method, for example, a method of wrapping the glass fabric with a film and then thermocompression-bonding openings, a method of putting the glass fabric in a box and then tightly adhering openings to eliminate gaps, or a method of attaching openings with a tape or the like can be employed.

When packaging the glass fabric in the state of a roll wound on a hollow columnar core tube with a film, for example, the glass fabric roll is covered with the film, openings are hermetically sealed by thermocompression bonding, and the excess film is pushed into the hollow portion from one or both ends of the core tube, whereby a recess extending from one or both ends of the core tube into the hollow portion can be formed. Examples of a method of packaging the glass fabric in an annular shape through which the hollow portion of the core tube penetrates include a method of inserting a tube-shaped film into the hollow portion of the core tube of the glass fabric roll, covering the glass fabric roll with another film, and then hermetically sealing the openings by thermocompression-bonding the tube-shaped film and the tube-shaped film penetrating the hollow portion. As a method of packaging the glass fabric by joining the film and the core tube, for example, the film may be attached to the surface of the core tube using a tape without any gaps therebetween.

The above-described steps do not necessarily have to be performed in a mode where the steps can be distinguished as separate steps, and multiple steps can be performed all at once (simultaneously). Further, the method of producing a glass fabric may include arbitrary steps in addition to the above-described steps. For example, the method may include the slitting step after the opening filament step. If possible, the order of the above-described steps can be changed.

<<Glass fabric Package>>

The glass fabric package of the present disclosure includes a packaging material, and a glass fabric housed inside the packaging material. The glass fabric is configured using glass yarns containing plural filaments as warp yarns and weft yarns, and has a dielectric loss tangent at 10 GHz of 0.00200 or less. The packaging material housing the glass fabric is hermetically sealed, and has a water vapor transmission rate of 8 $g/(m^2 \times 24\ hr)$ or lower at a measurement temperature of 40°C and a measurement humidity of 90%Rh. It is conventionally believed that, since the reaction in which Si-O-Si bonds are cleaved by moisture to generate Si-OH groups is not activated in the temperature range below 100°C, the dielectric loss tangent of a glass fabric having a dielectric loss tangent at 10 GHz of 0.00200 or less does not change with time even if the glass fabric is stored for a long period in the temperature range below 100°C. Therefore, no special consideration has been given to the storage form of a glass fabric, and there are cases where the dielectric loss tangent increases with time even in a glass fabric having a low dielectric loss tangent at the time of its production. In this respect, in the glass fabric package of the present disclosure, the cleavage of Si-O-Si bonds by moisture entering a storage environment from the external environment and the resulting generation of Si-OH groups are inhibited, so that an increase in the dielectric loss tangent of the glass fabric with time can be inhibited. It is noted here that the term "inhibition" used herein does not mean that the dielectric loss tangent does not increase at all, and it is sufficient as long as an increase in the dielectric loss tangent is inhibited to a certain extent.

<Glass fabric>

The details of the glass fabric, the dielectric loss tangent of the glass fabric, the glass yarns, the silane coupling agent, and the ignition loss in the glass fabric package are as described above in the sections of <Glass fabric> to <Ignition Loss> under <<Glass fabric Storage Method>>; therefore, the descriptions thereof are incorporated herein for the glass fabric package.

<Packaging Material>

The packaging material can house and hermetically seal the glass fabric. The packaging material (e.g., a box or a film) has a water vapor transmission rate of 8 g/(m$^2$ × 24 hr) or lower as measured under the conditions of 40°C and 90% Rh. It is noted here that the term "hermetically sealed" means a state in which openings are tightly closed without any gaps and the temperature, dew point, and air pressure in the glass fabric package can each be controlled to be equal to or lower than a certain standard. Further, in a hermetically sealed state, sealing is preferably made in such a manner to prevent the intrusion of solids, liquids, and gases. By inhibiting the intrusion of solids, liquids, and gases, the effect of inhibiting an increase in the dielectric loss tangent of the glass fabric according to the present disclosure is likely to be obtained. The packaging material is not limited as long as it satisfies the above-described configuration, and examples thereof include films and box-shaped packaging materials.

<Water Vapor Transmission Rate>

The packaging material has a water vapor transmission rate of 8 g/(m$^2$ × 24 hr) or lower at a measurement temperature of 40°C and a measurement humidity of 90%Rh. The amount of moisture inside such a packaging material can be controlled, so that an increase in the dielectric loss tangent of the glass fabric with time, which is caused by water existing in the packaging material, can be inhibited. From the standpoint of the ease of controlling the amount of moisture inside the packaging material, the water vapor transmission rate of the packaging material at a measurement temperature of 40°C and a measurement humidity of 90%Rh is preferably 8 g/(m$^2$ × 24 hr) or lower, more preferably 4 g/(m$^2$ × 24 hr) or lower, still more preferably 2 g/(m$^2$ × 24 hr) or lower, yet still more preferably 1 g/(m$^2$ × 24 hr) or lower, particularly preferably 0.3 g/(m$^2$ × 24 hr) or lower, most preferably 0.1 g/(m$^2$ × 24 hr) or lower. When the water vapor transmission rate of the packaging material is 8 g/(m$^2$ × 24 hr) or lower, the amount of moisture penetrating through the packaging material is small, so that the amount of moisture inside the packaging material can be easily controlled. A lower limit value of the water vapor transmission rate is 0 g/(m$^2$ × 24 hr) or higher, for example, higher than 0 g/(m$^2$ × 24 hr).

<Film>

As the packaging material, a film can be used. The film is not limited as long as its water vapor transmission rate satisfies the above-described range, and examples thereof include ceramic vapor-deposited films, aluminum vapor-deposited films, aluminum foils, and aluminum laminate films. From the standpoint of the ease of satisfying the above-described range of the water vapor transmission rate, an aluminum foil or an aluminum laminate film is preferred. The film has a thickness of preferably 30 μm to 500 μm. A lower limit value of the thickness of the film is preferably 50 μm or more, more preferably 70 μm or more, still more preferably 80 μm or more, particularly preferably 90 μm or more. When the thickness is 50 μm or more, the water vapor transmission rate is likely to be low, and the generation of pinholes caused by wrinkles, scratches, and the like is unlikely to occur. An upper limit value of the thickness of the film is preferably 400 μm or less, 300 μm or less, 200 μm or less, or 170 μm or less.

The glass fabric is preferably in the form of a package in which the glass fabric is packaged in a film in the state of a roll wound on a hollow columnar core tube having a columnar cavity (hollow portion) in the center (hereinafter, also simply referred to as "glass fabric roll"). For the same reasons as described above in the section of <Packaging Material> under <<Glass fabric Storage Method>>, the glass fabric roll is preferably configured such that the film has a recess extending from one or both ends of the core tube into the hollow portion, or a film-like packaging material has an annular shape (donut shape) penetrating through the hollow portion of the core tube, and a support rod can thereby be inserted into the hollow portion of the core tube. Alternatively, from the ease of handling the glass fabric roll, the glass fabric is preferably hermetically sealed from the external environment by the film-like packaging material and the core tube. Alternatively, the glass fabric is preferably hermetically sealed from the external environment by the film-like packaging material and the core tube. As described above, specific examples of these aspects are schematically illustrated in, for example, FIGs. 1(1a) to (1c).

From the standpoint of the ease of inserting a support rod, a ratio of the volume occupied by a space constituting the inside of the film-like package is preferably 70% or less, more preferably 50% or less, still more preferably 30% or less, particularly preferably 10% or less, with respect to the volume of the hollow portion of the core tube. A lower limit value of the volume of the inside of the package with respect to the volume of the hollow portion may be 0% or more. For example, in the form schematically illustrated in FIG. 1(1c), the volume of the inside of the package with respect to the volume of the hollow portion is 0%.

<Core Tube>

For the same reasons as described above in the section of <Core Tube> under <<Glass fabric Storage Method>>, the core tube is preferably made of paper, a resin, or an FRP. Further, the core tube has a water vapor transmission rate, which is measured under the conditions of 40°C and 90%Rh, of preferably 8 g/(m$^2$ × 24 hr) or lower, more preferably 4 g/(m$^2$ × 24 hr) or lower, still more preferably 2 g/(m$^2$ × 24 hr) or lower, yet still more preferably 1 g/(m$^2$ × 24 hr) or lower, particularly preferably 0.3 g/(m$^2$ × 24 hr) or lower, especially preferably 0.1 g/(m$^2$ × 24 hr) or lower. A lower limit value of the water vapor transmission rate is 0 g/(m$^2$ × 24 hr) or higher, for example, higher than 0 g/(m$^2$ × 24 hr).

<Box-Shaped Packaging Material>

As the packaging material, a box-shaped packaging material can be used as well. The box-shaped packaging material is not limited as long as its water vapor transmission rate satisfies the above-described range, and examples thereof include boxes whose openings can be hermetically sealed, and which are made of metal, plastic, wood, cardboard, or a combination thereof. From the standpoint of the ease of satisfying the above-described range of the water vapor transmission rate and the ease of reuse, the box-shaped packaging material is preferably made of metal or plastic, more preferably made of metal. It is noted here that the term "box" used herein refers to a movable container that is hermetically sealable for insulating the glass fabric from the ambient air. One or more pieces of glass fabric may be stored in the box.

<Package Surface Area>

For the same reasons as described above in the section of <Core Tube> under <<Glass fabric Storage Method>>, the package surface area is not limited as long as the dew point of the storage environment of the package satisfies the range of the present disclosure; however, it is preferably 10 m$^2$ or less, more preferably 7 m$^2$ or less, still more preferably 5 m$^2$ or less, yet still more preferably 4 m$^2$ or less. A lower limit value of the package surface area is not limited as long as the package can hermetically seal the glass fabric from the external environment.

<Dew Point Inside Glass fabric Package>

In the glass fabric package, the dew point inside the packaging material under the atmospheric pressure is preferably 18°Cdp or lower. In the present disclosure, unless otherwise specified, the dew point refers to the dew point of a storage environment under the atmospheric pressure. When the dew point inside the packaging material under the atmospheric pressure is 18°Cdp or lower, an increase in the dielectric loss tangent of the glass fabric with time can be more effectively inhibited. The dew point is preferably -50°Cdp to 18°Cdp. A lower limit value of the dew point may be more preferably -40°Cdp or higher, -32°Cdp or higher, -30°Cdp or higher, - 20°Cdp or higher, -10°Cdp or higher, 0°Cdp or higher, 10°Cdp or higher, or 13°Cdp or higher. An upper limit value of the dew point that can be arbitrarily combined with the above-described lower limit value may be more preferably 15°Cdp or lower, 10°Cdp or lower, 5°Cdp or lower, 0°Cdp or lower, -5°Cdp or lower, -10°Cdp or lower, -15°Cdp or lower, -20°Cdp or lower, or - 21°Cdp or lower.

As a method of controlling the dew point in the above-described range, any known humidity control method, humidity control medium, humidity control mechanism, and humidity control device can be used. Examples of the method include: (1) use of a moisture absorbent; (2) replacement of the atmosphere inside the packaging material with a gas (e.g., dry gas) having a prescribed moisture content; (3) dehumidification of the atmosphere inside the packaging material by utilizing dew condensation at a low temperature; (4) adjustment of the atmosphere inside the packaging material to a prescribed moisture content by reducing the pressure; and (5) a combination of these methods. For example, by performing any of the above-described controls of (1) to (5) and hermetically sealing the packaging material, the effect of inhibiting an increase in the dielectric loss tangent is likely to be obtained.

In the case of using a dehumidifier for controlling the dew point, the dehumidifier is not limited as long as it can control the dew point in the above-described range, and examples thereof include a compressor-type dehumidifier that utilizes dew condensation at a low temperature, and a desiccant-type (zeolite-type) dehumidifier that repeatedly regenerates a dehumidifying agent with heat.

<Moisture Absorbent>

In the glass fabric package, it is preferred to enclose a moisture absorbent inside the packaging material. By this, not only the moisture inside the packaging material but also the moisture that has penetrated through and flowed into the packaging material during storage can be absorbed.

From the standpoint of hygroscopicity, the moisture absorbent is preferably, for example, at least one selected from the group consisting of silica gel, calcium oxide, calcium chloride, calcined diatomaceous earth, synthetic zeolite, a clay-based desiccant, phosphorus pentoxide, magnesium sulfate, copper sulfate, magnesium chloride, cobalt chloride, granular soda lime, and magnesium perchlorate. Particularly, the moisture absorbent is preferably at least one selected from the group consisting of silica gel, calcium oxide, calcium chloride, and calcined diatomaceous earth. Further, from the standpoint of occupied space and packaging (packing) form, it is preferred to use a sheet-form moisture absorbent.

The amount of the moisture absorbent to be used is not limited; however, it is preferred to use the moisture absorbent in an appropriate amount in accordance with the hygroscopicity (moisture absorption amount and moisture absorption time) of the moisture absorbent, the storage period, and the like. With regard to the moisture absorption amount, it is preferred to use the moisture absorbent in an amount that is equal to or more than enough. In other words, the maximum amount of moisture that can be absorbed by the moisture absorbent is preferably greater than the amount of moisture in the atmosphere.

As described above in the section of <Moisture Absorbent> under <<Glass fabric Storage Method>>, the amount of enclosed moisture absorbent, which is a value calculated by the following Formula (2), is preferably 0.0030 or less, more preferably 0.0023 or less, still more preferably 0.0012 or less, particularly preferably 0.0005 or less. The value calculated by the following Formula (2) may be 0.

$$\text{WVTR } [g/(m^2 \times 24 \text{ hr})] \times \text{Package surface area } [m^2]/\text{Amount of enclosed moisture absorbent } [g]$$

$$(2)$$

{wherein, WVTR represents the water vapor transmission rate at a measurement temperature of 40°C and a measurement humidity of 90%Rh}.

As described above in the section of <Moisture Absorbent> under <<Glass fabric Storage Method>>, the dew point change rate inside the package containing the moisture absorbent therein is preferably 3.0 or less, more preferably 1.0 or less, still more preferably 0.50 or less, yet still more preferably 0.30 or less, particularly preferably 0.10 or less, or 0.02 or less. The dew point change rate may be a negative value.

<Dry Gas>

In the case of using a dry gas for controlling the dew point inside the packaging material, it is preferred to use a gas (dry gas) having a dew-point temperature of 18°Cdp or lower. With such a dry gas, it is easy to control the inside of the packaging material to have an atmosphere having a dew point of 18°Cdp or lower. The dew-point temperature of the dry gas is preferably -60°Cdp to 18°Cdp. A lower limit value of the dew-point temperature of the dry gas may be more preferably -50°Cdp or higher, -40°Cdp or higher, or -30°Cdp or higher. An upper limit value of the dew-point temperature of the dry gas may be more preferably 15°Cdp or lower, 10°Cdp or lower, 5°Cdp or lower, 0°Cdp or lower, -5°Cdp or lower, -10°Cdp or lower, -15°Cdp or lower, - 20°Cdp or lower, or -21°Cdp or lower.

As the dry gas, for example, a dry air having the above-described dew-point temperature range, or a gas that has the above-described dew-point temperature range and contains at least one selected from the group consisting of nitrogen, argon, and oxygen can be utilized. It is preferred to use the dry air because of its ease of handling.

<Temperature Inside Glass fabric Package>

In the glass fabric package, the temperature inside the packaging material is preferably 100°C or lower. When this temperature is 100°C or lower, an increase in the dielectric loss tangent of the glass fabric with time during long-term storage (e.g., 30 days or longer) can be effectively inhibited. The temperature of the glass fabric storage environment (inside of the packaging material) during storage of the glass fabric is preferably 0°C to 100°C. An upper limit value of the average temperature is preferably 50°C or lower, more preferably 40°C or lower, still more preferably 35°C or lower, yet still more preferably 30°C or lower, particularly preferably 25°C or lower. A lower limit value of the average temperature may be preferably 10°C or higher, or 20°C or higher.

<Pressure Inside Glass fabric Package>

In the case of reducing the pressure to control the dew point inside the packaging material, it is preferred to control the pressure to be a reduced pressure of lower than the atmospheric pressure ($10^5$ Pa). A method of controlling the air pressure inside the packaging material to be a reduced pressure of lower than the atmospheric pressure is not limited as long as it can control the dew point in the above-described range, and any known depressurization control method, depressurization control medium, depressurization control mechanism, depressurization control device and the like, examples of which include a vacuum pump, can be used.

For example, by controlling the air pressure inside the packaging material to be a reduced pressure of lower than the atmospheric pressure and hermetically sealing the packaging material, the effect of inhibiting an increase in the dielectric loss tangent is likely to be obtained. The air pressure around the glass fabric at the time of storing or packing the glass fabric is preferably $10^4$ Pa or lower, more preferably $10^3$ Pa or lower. A lower limit value of this air pressure is not particularly limited; however, it is preferably higher than 0 Pa, or 10 Pa or higher.

<Storage Period>

The storage period of the glass fabric, i.e., the period in which the sealing of the packaging material is maintained in the glass fabric package of the present disclosure, is not particularly limited; however, it is preferably 30 days to 5 years from the standpoint of the time required for transporting the glass fabric, improvement in the supply stability, and the like. A lower limit value of the storage period is preferably 30 days or longer, more preferably 90 days or longer, still more preferably 180 days or longer, yet still more preferably 365 days or longer, particularly preferably 730 days or longer. Further, from the standpoint of reduction in the storage cost and the like, an upper limit value of the storage period of the glass fabric is preferably 5 years or shorter, more preferably 3 years or shorter. When the storage period is in the above-described range, the effects of using the glass fabric package of the present disclosure can be sufficiently obtained. The longer the storage period, the more pronounced can be the effect of inhibiting an increase in the dielectric loss tangent.

<<Production Method of Glass fabric Package>>

The glass fabric package of the present disclosure can be produced by packaging, in accordance with the method described above in the section of <Packaging Step>, a glass fabric produced by the method described above in the section of <<Production Method of Glass fabric>>, and the descriptions in these sections are incorporated herein for the production method of the glass fabric package.

EXAMPLES

<<Measurement and Evaluation Methods>>

<Method of Measuring Basis Weight (Fabric Weight)>

The basis weight of a glass fabric was determined by cutting the glass fabric to a prescribed size and dividing the weight thereof by the sample area. In the present Examples and Comparative Examples, an operation of cutting out each glass fabric in a size of 10 cm$^2$ and measuring the weight thereof was performed 10 times, and an average value thereof was defined as the basis weight of the glass fabric.

<Method of Measuring Converted Thickness>

A glass fabric is a discontinuous planar body in which air exists between glass fibers. Therefore, the converted thickness was calculated by dividing the basis weight of each glass fabric (fabric mass) by the density of glass. Specifically, the converted thickness was calculated by the following equation:

$$\text{Converted thickness } (\mu m) = \text{Basis weight } (g/m^2) \div \text{Density } (g/cm^3)$$

The thus obtained value of the converted thickness was used for the measurement by a resonance method.

<Method of Measuring Dielectric Loss Tangent>

The dielectric loss tangent of each glass fabric was determined in accordance with IEC 62562. Specifically, a glass fabric sample that was sampled at a size required for the measurement using a split cylinder resonator was stored in a constant temperature and humidity oven at 23°C and 50%RH for 8 hours or longer. Then, for the thus stored sample, the dielectric characteristics at 10 GHz were measured using a split cylinder resonator (manufactured by EM Labs, Inc.) and an impedance analyzer (manufactured by Agilent Technologies, Inc.). The measurement was performed five times for each sample, and an average value thereof was calculated. The above-described converted thickness was used as the thickness of each sample. It is noted here that IEC 62562 mainly prescribes a method for measuring the dielectric characteristics in the microwave band of fine ceramic materials used in microwave circuits.

<Method of Measuring Ignition Loss of Glass fabric>

The ignition loss of each glass fabric was determined in accordance with JIS R3420.

<Method of Measuring Temperature and Dew Point>

The temperature and the dew point were measured using a handheld dew point meter DM70 manufactured by Vaisala K.K. Depending on the dew point to be measured, a DMP74A probe or a DMP74B probe and an MI70 indicator were used for measuring the dew point under the atmospheric pressure of a storage environment. Specifically, the DMP74A probe was used when the dew point was higher than -30°Cdp, and the DMP74B probe was used when the dew point was -30°Cdp or lower. The average temperature and the average dew point were determined by calculating averages of the temperature and the dew point that were measured at three-hour intervals using DM70, respectively.

<Method of Measuring Pressure>

The pressure inside a box was measured by visually reading a pressure gauge attached to the box.

<Method of Measuring Water Vapor Transmission Rate of Packaging Material and Core Tube>

Measurement Method A: Case of Plastic film, Plastic sheet, or Plastic-Containing Multilayer Material Having Packaging Material Thickness of 2 mm or Less

The thickness and the water vapor transmission rate of a packaging material were measured in accordance with JIS K7130 and JIS K7129-1, respectively. The measurement was performed three times for each sample, and average values thereof were defined as the thickness and the water vapor transmission rate of the packaging material. It is noted here that, as test pieces, those having a uniform thickness with no visually observable wrinkles, creases, or pinholes were used.

- Apparatus: water vapor permeability meter L80-5000 (manufactured by Lyssy, ISO-PE-Z91)
- Thickness gauge: ID-C1012C (manufactured by Mitutoyo Corporation, ISO-PE-Z78)
- Temperature and humidity: 40°C and 90%Rh
- Measurement area: about 50 cm$^2$
- Reference sample: 19 $\mu$m-thick PET (25.5 g/(m$^2$ $\times$ 24 hr))
- Measurement direction: transmission from the surface arranged on the outer side at the time of packaging the glass fabric

Measurement Method B: Case of Packaging Material Other Than Subject of Measurement Method A And Core Tube

For a packaging material other than the subject of the measurement method A, the weight of water vapor penetrating into the packaging material was measured when the packaging material was hermetically sealed at a temperature of 40°C and a humidity outside the packaging material of 90%Rh with the air inside the packaging material being maintained in a dry state. The weight of water vapor was calculated per 24 hours of permeation time and per 1 m$^2$ of outer surface area of the packaging material. Specifically, a dry air having a dew point of -30°Cdp was enclosed inside the packaging material, 800 g of a moisture absorbent of JIS Z0701 (Desiccants for Packaging) Class 1 Type A or of equivalent or higher quality was added thereto, the temperature and the dew point were measured, and the packaging material was then hermetically sealed. In this process, when 800 g of the moisture absorbent could not be placed inside the packaging material, the measurement was to be performed in such a manner to identify the weight of the enclosed moisture absorbent, and the moisture absorbent was to be enclosed such that the volume thereof was equal to or more than half the volume inside the packaging material. Subsequently, the sealed packaging material was placed in a 40°C and 90%Rh thermo-hygrostat chamber, and stored in this thermo-hygrostat chamber over an appropriate period of 48 hours or longer. After a certain period (this period is defined as the retention time in the thermo-hygrostat chamber), the packaging material was taken out of the thermo-hygrostat chamber and, immediately thereafter, the temperature and the dew point inside the packaging material as well as the post-test weight of the moisture absorbent were measured. When the post-test weight of the moisture absorbent exceeded 130% of the weight of the enclosed moisture absorbent, the measurement was to be performed again with, for example, a shortened retention time in the thermo-hygrostat chamber or an increased amount of the moisture absorbent. Further, the absolute humidity $(g/m^3)$ before the start of the test and that after the completion of the test were calculated from the temperature and the dew point that were measured before and after the test. Specifically, the temperature and the dew point were input to a VAISALA Humidity Calculator to calculate the absolute humidity. The measurement was performed three times for each sample, the water vapor transmission rate was calculated using the following equations, and an average value thereof was defined as the water vapor transmission rate of the packaging material: Change in amount of water vapor in internal gas (g) = {Absolute humidity after completion of test $(g/m^3)$ - Absolute humidity at start of test $(g/m^3)$} $\times$ Volume inside packaging material $(m^3)$ Water vapor transmission rate $(g/(m^2 \times 24\ hr))$ = {Post-test weight of moisture absorbent (g) - Weight of enclosed moisture absorbent (g) + Change in amount of water vapor in internal gas (g)}/{Outer surface area of packaging material $(m^2)$ $\times$ {Retention time in thermo-hygrostat chamber (hr)/24 (hr)}}

Measurement Method C: Case of Core Tube

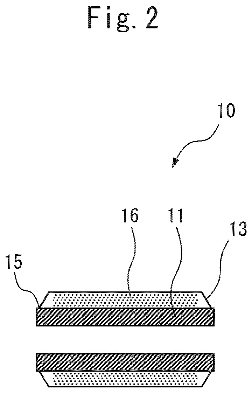

FIG. 2 is a schematic drawing for describing a method of measuring the water vapor transmission rate of a core tube. As illustrated in FIG. 2, with regard to a core tube, a film 13 having a known water vapor transmission rate was wound on the outer surface of a core tube 11, and a dry air having a dew point of -30°Cdp was enclosed inside a space between the film and the core tube, after which 800 g of a moisture absorbent 16 of JIS Z0701 (Desiccants for Packaging) Class 1 Type A or of equivalent or higher quality was added thereto, and joints 15 between the film and the core tube were hermetically sealed with a tape to obtain a glass fabric package 10. When 800 g of the moisture absorbent could not be placed therein, the measurement was to be performed in such a manner to identify the weight of the enclosed moisture absorbent, and the moisture absorbent was to be enclosed such that the volume thereof was equal to or more than half the volume inside the packaging material. Subsequently, the water vapor transmission rate of the packaging material was calculated in the same manner as in <Method of Measuring Water Vapor Transmission Rate of Packaging Material: Measurement Method B>. Thereafter, based on the water vapor transmission rate and the surface area of the film wound on the outer surface of the core tube, the water vapor transmission rate of the core tube was calculated using the following equation:

Water vapor transmission rate of packaging material $(g/(m^2 \times 24\ hr))$ = {Water vapor transmission rate of film $(g/(m^2 \times 24\ hr))$ $\times$ Surface area of film $(m^2)$ + Water vapor transmission rate of core tube $(g/(m^2 \times 24\ hr))$ $\times$ Outer surface area of core tube $(m^2)$}/{ Surface area of film $(m^2)$ + Outer surface area of core tube $(m^2)$}

<Change Rate of Dielectric Loss Tangent (Df) of Glass fabric>

The change rate of the dielectric loss tangent (Df) of a glass fabric was calculated from the dielectric loss tangent after X days of storage $(Df_x)$ with respect to the dielectric loss tangent at the start of storage $(Df_0)$, using the following equation:

$$\text{Df Change Rate (\%)} = Df_x/Df_0 \times 100$$

A lower change rate (increase) of the dielectric loss tangent at 10 GHz of the glass fabric with time over a long period indicates a greater effect of maintaining the storage environment of the glass fabric. The change rate of the glass fabric with time is evaluated by the above-described equation, and the change rate of the dielectric loss tangent of the glass fabric after 365 days from the day of starting the storage of the glass fabric is preferably 180% or less, more preferably 160% or less, still more preferably 140% or less, yet still more preferably 120% or less, particularly preferably 110% or less. Further, the change rate of the dielectric loss tangent of the glass fabric after 30 days is preferably 120% or less, more preferably 115% or less, still more preferably 110% or less, particularly preferably 105% or less. When the change in the dielectric loss tangent is in the above-described range (120% or less after 30 days, and 180% or less after 365 days), it is deemed that the effect of controlling the storage environment of the glass fabric was obtained. The day of starting the storage is not particularly limited, and it is defined as the day on which a person skilled in the art starts to store the glass fabric in a certain environment for a certain period of time. For example, the day of starting the storage is the day on which the glass fabric is packaged in a film and/or a box-shaped packaging material after the completion of a surface treatment of the glass fabric, and the storage period is a period thereafter until the packaged glass fabric is opened by a customer process.

<Dew Point Change Rate>

The dew point change rate inside a package containing a moisture absorbent therein was calculated by the following equation:

Dew point change rate = (Dew point (°Cdp) of storage environment after 365 days of storage - Initial dew point (°Cdp) of storage environment)/(Average dew point (°Cdp) of external environment of packaging material - Dew point (°Cdp) of storage environment after 365 days of storage).

It is noted here that the packaging material was evaluated as "unsatisfactory (NG)" when the average dew point of the external environment of the packaging material was equal to the dew point of the storage environment after 365 days of storage.

<Method of Measuring Surface Area of Packaging Material>

The surface area of the packaging material was determined by measuring the shape in the state of a package after packaging. As illustrated in FIG. 1(1c), when the glass fabric is hermetically sealed from the external environment by a film and a core tube, the surface area of the packaging material was determined by measuring the surface area of the film-like packaging material and the outer surface area of the core tube.

<<Moisture Absorbents and Films>>

<Types of Moisture Absorbents>

- Moisture absorbent A: ABREON (registered trademark) AW (Type A silica gel), manufactured by TOYOTAKAKO Co., Ltd.
- Moisture absorbent B: RP agent (calcined diatomaceous earth and calcium oxide), manufactured by Mitsubishi Gas Chemical (MGC) Company, Inc.

<Types of Films>

[Table 1]

Table 1

|  |  | A | B | C | D |
|---|---|---|---|---|---|
| Thickness | $\mu$m | 99 | 116 | 78 | 45 |
| Water vapor transmission rate | g/(m$^2$ × 24 hr) | 0.1 | 0.2 | 6.6 | 11 |

<<Production of Glass fabrics>>

<Production of Q1035 (Greige Fabric)>

Using glass yarns having an SiO$_2$ composition amount of more than 99.9% by mass and an air-jet loom, a fabric was woven at a thread count of 66 warp yarns/25 mm and 68 weft yarns/25 mm. It is noted that the weaving was performed at a fabric width of 1,300 mm. As the warp yarns, silica glass yarns having an average filament diameter of 5.0 $\mu$m, a filament number of 100, and a twist number of 1.0 Z were used. As the weft yarns, silica glass yarns having an average filament diameter of 5.0 $\mu$m, a filament number of 100, and a twist number of 1.0 Z were used.

<Production of L1035 (Greige Fabric)>

Using glass yarns having an SiO$_2$ composition amount of 53% by mass and a B$_2$O$_3$ composition amount of 23% by mass, and an air-jet loom, a fabric was woven at a thread count of 66 warp yarns/25 mm and 68 weft yarns/25 mm. It is noted that the weaving was performed at a fabric width of 1,300 mm. As the warp yarns, glass yarns having an average filament diameter of 5.0 $\mu$m, a filament number of 100, and a twist number of 1.0 Z were used. As the weft yarns, glass yarns having an average filament diameter of 5.0 $\mu$m, a filament number of 100, and a twist number of 1.0 Z were used.

<<Examples and Comparative Examples>>

<Example A1>

The above-obtained Q1035 greige fabric was heated in a heating furnace at 600°C for 60 seconds to perform deoiling (heat-deoiling step). Subsequently, a treatment solution was prepared by dispersing 0.15% by mass of 3-methacryloxypropyltrimethoxysilane (silane coupling agent A; Z6030 manufactured by Dow Toray Co., Ltd.) and 0.15% by mass of 5-hexenyltrimethoxysilane (silane coupling agent B; Z6161 manufactured by Dow Toray Co., Ltd.) in pure water adjusted to pH = 3 with acetic acid. The fabric was immersed in the treatment solution at a line tension of 200 N and a line speed of 30 m/min (surface treatment agent coating step), squeezed to remove the liquid with an NBR rubber roll at a pressure of 0.3 MPa, and then heat-dried at 130°C for 60 seconds to fix the silane coupling agent (fixation step). The thus dried fabric was high-pressure opened by spraying at a pressure of 2.0 kg/cm$^2$, and then dried at 130°C for 1 minute (drying step) and wound up, whereby a rolled glass fabric was obtained. This glass fabric was placed and stored in a storage room that was maintained at a temperature of 23°C and a dew point of - 30°Cdp by circulation of -30°Cdp dry air. The glass fabric was taken out and evaluated after 30 days and 365 days.

<Example A2>

The rolled glass fabric obtained in Example A1 was packaged in a bag of a film A (thickness: 99 μm, water vapor transmission rate: 0.1 g/(m$^2$ × 24 hr)) under an environment having a temperature of 23°C, and the moisture absorbent A (800 g) was enclosed inside the bag. Further, a dry air having a dew point of -20°Cdp was enclosed inside the bag to adjust the dew point to be -20°Cdp, and an opening was hermetically sealed by thermocompression bonding, whereby a packaged glass fabric was obtained. Thereafter, this packaged glass fabric was moved to and stored in an external environment having a temperature of 30°C and a dew point of 24°Cdp. The glass fabric was taken out and evaluated after 30 days and 365 days.

<Example A3>

A rolled glass fabric was obtained in the same manner as in Example A1, except that the above-obtained Q1035 greige fabric was deoiled by heating at 1,000°C for 60 seconds. This glass fabric was placed in a box-shaped packaging material (water vapor transmission rate: 0.0 g/(m$^2$ × 24 hr)) under an environment having a temperature of 23°C and a dew point of 12°Cdp. Subsequently, the moisture absorbent A (800 g) was enclosed inside the resulting package, which was then hermetically sealed and stored. The glass fabric was taken out and evaluated after 30 days and 365 days.

<Example A4>

A rolled glass fabric was obtained in the same manner as in Example A1, except that the above-obtained Q1035 greige fabric was heated in a batch-type heating furnace at 370°C for 72 hours to perform the heat-deoiling step, and that a treatment solution prepared by dispersing 0.30% by mass of 3-methacryloxypropyltrimethoxysilane (silane coupling agent A; Z6030 manufactured by Dow Toray Co., Ltd.) was used. This glass fabric was packaged in a bag of a film A (thickness: 99 μm, water vapor transmission rate: 0.1 g/(m$^2$ × 24 hr)) under an environment having a temperature of 23°C and a dew point of 12°Cdp, and the moisture absorbent B (800 g) was enclosed inside the bag. Further, an opening was hermetically sealed by thermocompression bonding, whereby a packaged glass fabric was obtained. Thereafter, this packaged glass fabric was moved to and stored in an external environment having a temperature of 30°C and a dew point of 24°Cdp. The glass fabric was taken out and evaluated after 30 days and 365 days.

<Example A5>

The rolled glass fabric obtained in Example A1 was placed and stored in a storage room that was maintained at a temperature of 25°C and a dew point of 2°Cdp with the use of a dehumidifier. The glass fabric was taken out and evaluated after 30 days and 365 days.

<Example A6>

The rolled glass fabric obtained in Example A1 was placed and stored in a storage room that was maintained at a temperature of 25°C and a dew point of 8°Cdp with the use of a dehumidifier. The glass fabric was taken out and evaluated after 30 days and 365 days.

<Example A7>

The rolled glass fabric obtained in Example A1 was placed in a box-shaped packaging material (water vapor transmission rate: 0.0 g/(m$^2$ × 24 hr)) under an environment having a temperature of 30°C and a dew point of 24°Cdp, and the pressure inside the packaging material was reduced to 10$^3$ Pa using a vacuum pump, after which the packaging material was hermetically sealed and stored. In this case (10$^3$ Pa), the dew point inside the box-shaped packaging material was - 32°Cdp. The glass fabric was taken out and evaluated after 30 days and 365 days.

<Example A8>

The rolled glass fabric obtained in Example A1 was packaged in a bag of a film B (thickness: 116 μm, water vapor transmission rate: 0.2 g/(m$^2$ × 24 hr)) under an environment having a temperature of 23°C and a dew point of 12°Cdp, and the moisture absorbent A (800 g) was enclosed inside the bag. Further, a dry air having a dew point of -20°Cdp was enclosed inside the bag to adjust the dew point to be -20°Cdp, and an opening was hermetically sealed by thermocompression bonding, whereby a packaged glass fabric was obtained. Thereafter, this packaged glass fabric was moved to and stored in an external environment having a temperature of 30°C and a dew point of 24°Cdp. The glass fabric was taken out and evaluated after 30 days and 365 days.

<Example A9>

The rolled glass fabric obtained in Example A1 was packaged in a bag of a film C (thickness: 78 μm, moisture permeability: 6.6 g/(m$^2$ × 24 hr)) under an environment having a temperature of 23°C and a dew point of 12°Cdp, and the moisture absorbent A (8,000 g) was enclosed inside the bag. Further, an opening was hermetically sealed by thermocompression bonding, whereby a packaged glass fabric was obtained. Thereafter, this packaged glass fabric was moved to and stored in an external environment having a temperature of 30°C and a dew point of 24°Cdp. The glass fabric was taken out and evaluated after 30 days and 365 days.

<Example A10>

The rolled glass fabric obtained in Example A1 was placed and stored in a storage room that was maintained at a temperature of 45°C and a dew point of -2°Cdp by circulation of -2°Cdp dry air. The glass fabric was taken out and evaluated after 30 days and 365 days.

<Example A11>

The above-obtained Q1035 greige fabric was heated in a heating furnace at 600°C for 60 seconds to perform deoiling (heat-deoiling step) and then wound up to obtain a rolled glass fabric. This glass fabric was placed and stored in a storage room that was maintained at a temperature of 23°C and a dew point of -30°Cdp by circulation of -30°Cdp dry air. The glass fabric was taken out and evaluated after 30 days and 365 days.

<Comparative Example A1>

The rolled glass fabric obtained in Example A1 was placed and stored in a storage room that was maintained at a temperature of 30°C and a dew point of 24°Cdp. The glass fabric was taken out and evaluated after 30 days and 365 days.

<Reference Example A>

A rolled glass fabric was obtained in the same manner as in Example A1, except that the above-obtained L1035 greige fabric was heated in a batch-type heating furnace at 370°C for 72 hours to perform the heat-deoiling step. This glass fabric was placed and stored in a storage room that was maintained at a temperature of 30°C and a dew point of 24°Cdp. The glass fabric was taken out and evaluated after 30 days and 365 days.

<Comparative Example A2>

The rolled glass fabric obtained in Example A3 was placed and stored in a storage room that was maintained at a temperature of 30°C and a dew point of 24°Cdp. The glass fabric was taken out and evaluated after 30 days and 365 days.

<Comparative Example A3>

The rolled glass fabric obtained in Example A4 was placed and stored in a storage room that was maintained at a temperature of 30°C and a dew point of 24°Cdp. The glass fabric was taken out and evaluated after 30 days and 365 days.

<Comparative Example A4>

The rolled glass fabric obtained in Example A1 was placed and stored in a storage room that was maintained at a temperature of 40°C and a dew point of 38°Cdp. The glass fabric was taken out and evaluated after 30 days and 365 days.

<Comparative Example A5>

The rolled glass fabric obtained in Example A1 was packaged in a bag of a film D (thickness: 45 $\mu$m, water vapor transmission rate: 11 g/(m$^2$ $\times$ 24 hr)) under an environment having a temperature of 23°C and a dew point of 12°Cdp, and the moisture absorbent A (8,000 g) was enclosed inside the bag. Further, an opening was hermetically sealed by thermocompression bonding, whereby a packaged glass fabric was obtained. Thereafter, this packaged glass fabric was moved to and stored in an external environment having a temperature of 30°C and a dew point of 24°Cdp. The glass fabric was taken out and evaluated after 30 days and 365 days.

<Comparative Example A6>

The rolled glass fabric obtained in Example A11 was placed and stored in a storage room that was maintained at a temperature of 30°C and a dew point of 24°Cdp. The glass fabric was taken out and evaluated after 30 days and 365 days.
The production conditions and the evaluation results that relate to Examples A1 to A11, Comparative Examples A1 to A6, and Reference Example A are shown in Tables below.

[Table 2]

Table 2

| | | | Example A1 | Example A2 | Example A3 | Example A4 | Example A5 | Example A6 | Example A7 | Example A8 | Example A9 |
|---|---|---|---|---|---|---|---|---|---|---|---|
| Glass fabric | Style | - | Q1035 | Q1035 | Q1035 | Q1035 | Q1035 | Q1035 | Q1035 | Q1035 | Q1035 |
| | Heat-deoiling temperature | °C | 600 | 600 | 1,000 | 370 | 600 | 600 | 600 | 600 | 600 |
| | Heat-deoilina time | - | 60 sec | 60 sec | 60 sec | 72 hr | 60 sec | 60 sec | 60 sec | 60 sec | 60 sec |
| | Surface treatment type | - | A+B | A+B | A+B | A | A+B | A+B | A+B | A+B | A+B |
| | Dielectric loss tangent at 10 GHz | - | 0.00032 | 0.00032 | 0.00028 | 0.00150 | 0.00032 | 0.00032 | 0.00032 | 0.00032 | 0.00032 |
| | Basis weight | g/m$^2$ | 23.2 | 23.2 | 23.2 | 23.2 | 23.2 | 23.2 | 23.2 | 23.2 | 23.2 |
| | Thickness | μm | 34 | 34 | 34 | 34 | 34 | 34 | 34 | 34 | 34 |
| | Ignition loss | % | 0.052 | 0.052 | 0.054 | 0.124 | 0.052 | 0.052 | 0.052 | 0.052 | 0.052 |
| Storage form | Storage form | - | storage room | film | box | film | storage room | storage room | box + depressurization | film | film |
| | Surface area | m$^2$ | - | 2.5 | 4.0 | 2.5 | - | - | 40 | 2.5 | 25 |
| | Type of film | - | - | A | - | A | - | - | - | B | C |
| | Water vapor transmission rate of film at 40°C, 90%Rh | g/(m$^2$·24hr) | - | 0.1 | -(0) | 0.1 | - | - | -(0) | 0.2 | 6.6 |
| | Type of moisture absorbent | - | - | A | A | B | - | - | - | A | A |
| | Amount of moisture absorbent | g | - | 800 | 800 | 800 | - | - | - | 800 | 8,000 |
| | Value of Formula (2) | - | - | 0.0003 | 0.0000 | 0.0003 | - | - | - | 0.0006 | 0.0021 |
| External environment (of bag or box) | Temperature | °C | | 30 | 30 | 30 | | | 30 | 30 | 30 |
| | Dew point | °Cdp | | 24 | 24 | 24 | | | 24 | 24 | 24 |
| Initial storage environment | Storage environment: initial temperature | °C | 23 | 23 | 23 | 23 | 25 | 25 | 30 | 23 | 23 |
| | Storage environment initial dew point | °Cdp | -30 | -20 | 12 | 12 | 2 | 8 | -32 | -20 | 12 |

27

EP 4 733 221 A1

| | | | Example A1 | Example A2 | Example A3 | Example A4 | Example A5 | Example A6 | Example A7 | Example A8 | Example A9 |
|---|---|---|---|---|---|---|---|---|---|---|---|
| After 30-day storage | Storage environment: average temperature | °C | 23 | 30 | 30 | 30 | 25 | 25 | 30 | 30 | 30 |
| | Storage environment: average dew point | °Cdp | -30 | -21 | -12 | -8 | 2 | 8 | -32 | -11 | 13 |
| | Dielectric loss tangent at 10 GHz | - | 0.00032 | 0.00032 | 0.00028 | 0.00150 | 0.00033 | 0.00035 | 0.00032 | 0.00032 | 0.00036 |
| | Df change rate | % | 100 | 100 | 100 | 100 | 103 | 108 | 100 | 100 | 111 |
| After 365-day storage | Storage environment: average temperature | °C | 23 | 30 | 30 | 30 | 25 | 25 | 30 | 30 | 30 |
| | Storage environment: average dew point | °Cdp | -30 | -21 | -12 | -8 | 2 | 8 | -32 | -11 | 15 |
| | Storage environment: dew point | °Cdp | -30 | -21 | -12 | -8 | 2 | 8 | -32 | -11 | 15 |
| | Dielectric loss tanaent at 10 GHz | - | 0.00032 | 0.00032 | 0.00028 | 0.00152 | 0.00037 | 0.00043 | 0.00032 | 0.00032 | 0.00051 |
| | Df change rate | % | 100 | 100 | 100 | 101 | 116 | 134 | 100 | 100 | 158 |
| | Dew point change rate | - | - | -0.02 | -0.67 | -0.63 | - | - | - | 0.26 | 0.33 |

[Table 3]

[Table 3]

Table 3

| | | | Example A10 | Example A11 | Comparative Example A1 | Reference Example A | Comparative Example A2 | Comparative Example A3 | Comparative Example A4 | Comparative Example A5 | Comparative Example A6 |
|---|---|---|---|---|---|---|---|---|---|---|---|
| Glass fabric | Style | - | Q1035 | Q1035 | Q1035 | L1035 | Q1035 | Q1035 | Q1035 | Q1035 | Q1035 |
| | Heat-deoiling temperature | °C | 600 | 600 | 600 | 370 | 1000 | 370 | 600 | 600 | 600 |
| | Heat-deoiling time | - | 60 sec | 60 sec | 60 sec | 72 hr | 60 sec | 72 hr | 60 sec | 60 sec | 60 sec |
| | Surface treatment type | - | A+B | - | A+B | A+B | A+B | A | A+B | A+B | - |
| | Dielectric loss tangent at 10 GHz | - | 0.00032 | 0.00028 | 0.00032 | 0.00260 | 0.00028 | 0.00150 | 0.00032 | 0.00032 | 0.00028 |
| | Basis weight | g/m² | 23.2 | 23.2 | 23.2 | 24.2 | 23.2 | 23.2 | 23.2 | 23.2 | 23.2 |
| | Thickness | μm | 34 | 34 | 34 | 34 | 34 | 34 | 34 | 34 | 34 |
| | Ignition loss | % | 0.052 | 0.012 | 0.052 | 0.621 | 0.052 | 0.124 | 0.052 | 0.052 | 0.012 |
| Storage form | Storage form | - | storage room | storage room | storage room | storage room | storage room | storage room | storage room | film | storage room |
| | Surface area | m² | - | - | - | - | - | - | - | 2.5 | - |
| | Type of film | - | - | - | - | - | - | - | - | D | - |
| | Water vapor transmission rate of film at 40°C, 90%Rh | g/(m²·24hr) | - | - | - | - | - | - | - | 11 | - |
| | Type of moisture absorbent | - | - | - | - | - | - | - | - | A | - |
| | Amount of moisture absorbent | g | - | - | - | - | - | - | - | 8,000 | - |
| | Value of Formula (2) | - | - | - | - | - | - | - | - | 0.0034 | - |

(continued)

| | | | Example A10 | Example A11 | Comparative Example A1 | Reference Example A | Comparative Example A2 | Comparative Example A3 | Comparative Example A4 | Comparative Example A5 | Comparative Example A6 |
|---|---|---|---|---|---|---|---|---|---|---|---|
| External environment (of bag or box) | Temperature | °C | | | | | | | | 30 | |
| | Dew point | °Cdp | | | | | | | | 24 | |
| Initial storage environment | Storage environment: initial temperature | °C | 45 | 23 | 30 | 30 | 30 | 30 | 40 | 23 | 30 |
| | Storage environment initial dew point | °Cdp | -2 | -30 | 24 | 24 | 24 | 24 | 38 | 12 | 24 |
| After 30-day storage | Storage environment: average temperature | °C | 45 | 23 | 30 | 30 | 30 | 30 | 40 | 30 | 30 |
| | Storage environment: average dew point | °Cdp | -2 | -30 | 24 | 24 | 24 | 24 | 38 | 20 | 24 |
| | Dielectric loss tanaent at 10 GHz | - | 0.00032 | 0.00028 | 0.00044 | 0.00260 | 0.00035 | 0.00189 | 0.00049 | 0.00042 | 0.00041 |
| | Df change rate | % | 101 | 100 | 138 | 100 | 127 | 126 | 153 | 130 | 147 |

| | | | Example A10 | Example A11 | Comparative Example A1 | Reference Example A | Comparative Example A2 | Comparative Example A3 | Comparative Example A4 | Comparative Example A5 | Comparative Example A6 |
|---|---|---|---|---|---|---|---|---|---|---|---|
| After 365-day storage | Storage environment: average temperature | °C | 45 | 23 | 30 | 30 | 30 | 30 | 40 | 30 | 30 |
| | Storage environment: average dew point | °Cdp | -2 | -30 | 24 | 24 | 24 | 24 | 38 | 22 | 24 |
| | Storage environment: dew point | °Cdp | -2 | -30 | 24 | 24 | 24 | 24 | 38 | 22 | 24 |
| | Dielectric loss tangent at 10 GHz | - | 0.00035 | 0.00028 | 0.00067 | 0.00260 | 0.00054 | 0.00272 | 0.00097 | 0.00066 | 0.00063 |
| | Df change rate | % | 108 | 100 | 210 | 100 | 192 | 181 | 302 | 206 | 225 |
| | Dew point change rate | - | - | - | - | - | - | - | - | 5.0 | - |

In Example A1, the dielectric loss tangent of the glass fabric did not change after the long-term storage (after 30 days and after 365 days); however, in Comparative Example A1, the dielectric loss tangent of the glass fabric greatly increased. On the other hand, in Reference Example A in which the glass fabric had a dielectric loss tangent of more than 0.00200, no increase in the dielectric loss tangent was observed even in the same storage environment as that of Comparative Example A1. In Comparative Example A5, due to the high water vapor transmission rate of the bag used for packaging the glass fabric, the moisture inflow amount was large, and this made it difficult to sufficiently reduce the dew point inside the bag even with the use of the moisture absorbent.

<<Moisture Absorbents and Packaging Materials>>

<Types of Moisture Absorbents>

- Moisture absorbent A: ABREON (registered trademark) AW (Type A silica gel), manufactured by TOYOTAKAKO Co., Ltd.
- Moisture absorbent B: RP agent (calcined diatomaceous earth and calcium oxide), manufactured by Mitsubishi Gas Chemical (MGC) Company, Inc.

<Types of Packaging Materials>

[Table 4]

Table 4

| | | A | B | C | D | E | F | G |
|---|---|---|---|---|---|---|---|---|
| Material and Shape | | aluminum laminate film | ceramic vapor-deposited film | ceramic vapor-deposited film | ceramic vapor-deposited film | polyethylene film | stainless-steel box | cardboard box |
| Thickness | $\mu$m | 99 | 116 | 115 | 78 | 45 | - | - |
| Water vapor transmission rate | g/(m$^2$ × 24 hr) | 0.1 | 0.2 | 1.5 | 6.6 | 11 | 0.0 | 50 |

<<Production of Glass fabrics>>

<Production of Q1035 (Greige Fabric)>

Using glass yarns having an $SiO_2$ composition amount of more than 99.9% by mass and an air-jet loom, a fabric was woven at a thread count of 66 warp yarns/25 mm and 68 weft yarns/25 mm. It is noted that the weaving was performed at a fabric width of 1,300 mm. As the warp yarns, silica glass yarns having an average filament diameter of 5.0 $\mu$m, a filament number of 100, and a twist number of 1.0 Z were used. As the weft yarns, silica glass yarns having an average filament diameter of 5.0 $\mu$m, a filament number of 100, and a twist number of 1.0 Z were used.

<Production of L1035 (Greige Fabric)>

Using glass yarns having an $SiO_2$ composition amount of 53% by mass and a $B_2O_3$ composition amount of 23% by mass, and an air-jet loom, a fabric was woven at a thread count of 66 warp yarns/25 mm and 68 weft yarns/25 mm. It is noted that the weaving was performed at a fabric width of 1,300 mm. As the warp yarns, glass yarns having an average filament diameter of 5.0 $\mu$m, a filament number of 100, and a twist number of 1.0 Z were used. As the weft yarns, glass yarns having an average filament diameter of 5.0 $\mu$m, a filament number of 100, and a twist number of 1.0 Z were used.

<<Examples and Comparative Examples>>

<Example B1>

The above-obtained Q1035 greige fabric was heated in a heating furnace at 600°C for 60 seconds to perform deoiling (heat-deoiling step). Subsequently, a treatment solution was prepared by dispersing 0.15% by mass of 3-methacryloxypropyltrimethoxysilane (silane coupling agent A; Z6030 manufactured by Dow Toray Co., Ltd.) and 0.15% by mass of 5-hexenyltrimethoxysilane (silane coupling agent B; Z6161 manufactured by Dow Toray Co., Ltd.) in pure water adjusted to pH = 3 with acetic acid. The fabric was immersed in the treatment solution at a line tension of 200 N and a line speed of 30 m/min (surface treatment agent coating step), squeezed to remove the liquid with an NBR rubber roll at a pressure of 0.3 MPa, and then heat-dried at 130°C for 60 seconds to fix the silane coupling agent (fixation step). The thus dried fabric was high-pressure opened by spraying at a pressure of 2.0 kg/cm$^2$, and then dried at 130°C for 1 minute (drying step) and wound on a core tube having a hollow portion, whereby a rolled glass fabric was obtained.

This glass fabric was packaged in a packaging material A (aluminum laminate film, thickness: 99 $\mu$m, water vapor transmission rate: 0.1 g/(m$^2 \times$ 24 hr)) under an environment having a temperature of 23°C, and the moisture absorbent A (800 g) was enclosed inside. Further, a dry air having a dew point of -20°Cdp was enclosed inside to adjust the dew point to be -20°Cdp, and an opening was hermetically sealed by thermocompression bonding, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Example B2>

A rolled glass fabric was obtained in the same manner as in Example B1, except that the above-obtained Q1035 greige fabric was deoiled by heating at 1,000°C for 60 seconds. This glass fabric was placed in a packaging material F (stainless-steel box, water vapor transmission rate: 0.0 g/(m$^2 \times$ 24 hr)) under an environment having a temperature of 23°C and a dew point of 12°Cdp. Subsequently, the moisture absorbent A (800 g) was enclosed inside the packaging material, which was then hermetically sealed to obtain a glass fabric package. Thereafter, this glass fabric package was moved to and stored in an external environment having a temperature of 30°C and a dew point of 24°Cdp. The glass fabric was taken out and evaluated after 30 days and 365 days.

<Example B3>

A rolled glass fabric was obtained in the same manner as in Example B1, except that the above-obtained Q1035 greige fabric was heated in a batch-type heating furnace at 370°C for 72 hours to perform the heat-deoiling step, and that a treatment solution prepared by dispersing 0.30% by mass of 3-methacryloxypropyltrimethoxysilane (silane coupling agent A; Z6030 manufactured by Dow Toray Co., Ltd.) was used. This glass fabric was packaged in a packaging material A (aluminum laminate film, thickness: 99 $\mu$m, water vapor transmission rate: 0.1 g/(m$^2 \times$ 24 hr)) under an environment having a temperature of 23°C and a dew point of 12°Cdp, and the moisture absorbent B (800 g) was enclosed inside. Further, an opening was hermetically sealed by thermocompression bonding, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Example B4>

The rolled glass fabric obtained in Example B1 was packaged in a packaging material B (ceramic vapor-deposited film, thickness: 116 $\mu$m, water vapor transmission rate: 0.2 g/(m$^2 \times$ 24 hr)) under an environment having a temperature of 23°C, and the moisture absorbent A (800 g) was enclosed inside. Further, a dry air having a dew point of -20°Cdp was enclosed inside to adjust the dew point to be -20°Cdp, and an opening was hermetically sealed by thermocompression bonding, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Example B5>

The rolled glass fabric obtained in Example B1 was packaged in a packaging material C (ceramic vapor-deposited film, thickness: 115 $\mu$m, water vapor transmission rate: 1.5 g/(m$^2 \times$ 24 hr)) under an environment having a temperature of 23°C and a dew point of 12°Cdp, and the moisture absorbent A (8,000 g) was enclosed inside, after which an opening was hermetically sealed by thermocompression bonding, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Example B6>

The rolled glass fabric obtained in Example B1 was packaged in a packaging material D (ceramic vapor-deposited film, thickness: 78 $\mu$m, water vapor transmission rate: 6.6 g/(m$^2$ × 24 hr)) under an environment having a temperature of 23°C and a dew point of 12°Cdp, and the moisture absorbent A (8,000 g) was enclosed inside. Further, an opening was hermetically sealed by thermocompression bonding, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Example B7>

The rolled glass fabric obtained in Example B1 was placed in a packaging material F (stainless-steel box, water vapor transmission rate: 0.0 g/(m$^2$ × 24 hr)) under an environment having a temperature of 30°C and a dew point of 24°Cdp, and the pressure inside the packaging material was reduced to 10$^3$ Pa using a vacuum pump, after which the packaging material was hermetically sealed, whereby a glass fabric package was obtained. In this case (10$^3$ Pa), the dew point inside the glass fabric package was -32°Cdp. Thereafter, this glass fabric package was moved to and stored in an external environment having a temperature of 30°C and a dew point of 24°Cdp. The glass fabric was taken out and evaluated after 30 days and 365 days.

<Example B8>

The above-obtained Q1035 greige fabric was heated in a heating furnace at 600°C for 60 seconds to perform deoiling (heat-deoiling step) and then wound on a core tube having a hollow portion, whereby a rolled glass fabric was obtained. This glass fabric was packaged in a packaging material A (aluminum laminate film, thickness: 99 $\mu$m, water vapor transmission rate: 0.1 g/(m$^2$ × 24 hr)) under an environment having a temperature of 23°C, and the moisture absorbent A (800 g) was enclosed inside. Further, a dry air having a dew point of -20°Cdp was enclosed inside to adjust the dew point to be -20°Cdp, and an opening was hermetically sealed by thermocompression bonding, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Comparative Example B1>

The rolled glass fabric obtained in Example B1 was packaged in a packaging material E (polyethylene film, thickness: 45 $\mu$m, moisture permeability: 11 g/(m$^2$ × 24 hr)) under an environment having a temperature of 23°C and a dew point of 12°Cdp, and the moisture absorbent A (8,000 g) was enclosed inside. Further, an opening was hermetically sealed by thermocompression bonding, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Reference Example B>

A rolled glass fabric was obtained in the same manner as in Example B1, except that the above-obtained L1035 greige fabric was heated in a batch-type heating furnace at 370°C for 72 hours to perform the heat-deoiling step. This glass fabric was packaged in a packaging material E (polyethylene film, thickness: 45 $\mu$m, moisture permeability: 11 g/(m$^2$ × 24 hr)) under an environment having a temperature of 23°C and a dew point of 12°Cdp, and the moisture absorbent A (8,000 g) was enclosed inside. Further, an opening was hermetically sealed by thermocompression bonding, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Comparative Example B2>

The rolled glass fabric obtained in Example B2 was placed in a packaging material G (cardboard box, water vapor transmission rate: 50 g/(m$^2$ × 24 hr)) under an environment having a temperature of 23°C and a dew point of 12°Cdp. Subsequently, the moisture absorbent A (8,000 g) was enclosed inside the resulting package, which was then hermetically sealed, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Comparative Example B3>

The rolled glass fabric obtained in Example B3 was placed in a packaging material G (cardboard box, water vapor transmission rate: 50 g/($m^2 \times$ 24 hr)) under an environment having a temperature of 23°C and a dew point of 12°Cdp, and this packaging material was hermetically sealed, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.

<Comparative Example B4>

The rolled glass fabric obtained in Example B8 was packaged in a packaging material E (polyethylene film, thickness: 45 $\mu$m, moisture permeability: 11 g/($m^2 \times$ 24 hr)) under an environment having a temperature of 23°C and a dew point of 12°Cdp, and an opening was hermetically sealed by thermocompression bonding, whereby a glass fabric package was obtained. Thereafter, this glass fabric package was moved to and stored in an external environment having a temperature of 30°C and a dew point of 24°Cdp. The glass fabric was taken out and evaluated after 30 days and 365 days.
The production conditions and the evaluation results that relate to Examples B1 to B8, Comparative Examples B1 to B4, and Reference Example B are shown in Tables below.

[Table 5]

Table 5

| | | | Example B1 | Example B2 | Example B3 | Example B4 | Example B5 | Example B6 | Example B7 | Example B8 |
|---|---|---|---|---|---|---|---|---|---|---|
| Glass fabric | Style | - | Q1035 | Q1035 | Q1035 | Q1035 | Q1035 | Q1035 | Q1035 | Q1035 |
| | Heat-deoiling temperature | °C | 600 | 1,000 | 370 | 600 | 600 | 600 | 600 | 600 |
| | Heat-deoilina time | - | 60 sec | 60 sec | 72 hr | 60 sec | 60 sec | 60 sec | 60 sec | 60 sec |
| | Surface treatment type | - | A+B | A+B | A | A+B | A+B | A+B | A+B | - |
| | Dielectric loss tanaent at 10 GHz | - | 0.00032 | 0.00028 | 0.0015 | 0.00032 | 0.00032 | 0.00032 | 0.00032 | 0.00028 |
| | Basis weight | $g/m^2$ | 23.2 | 23.2 | 23.2 | 23.2 | 23.2 | 23.2 | 23.2 | 23.2 |
| | Thickness | $\mu$m | 34 | 34 | 34 | 34 | 34 | 34 | 34 | 34 |
| | Ignition loss | % | 0.052 | 0.054 | 0.124 | 0.052 | 0.052 | 0.052 | 0.052 | 0.012 |
| Packaging material and absorbent | Packaging material: shape | - | film | box | film | film | film | film | box | film |
| | Surface area | $m^2$ | 2.5 | 4.0 | 2.5 | 2.5 | 2.5 | 2.5 | 4.0 | 2.5 |
| | Packaging material: type | - | A | F | A | B | C | D | F | A |
| | Water vapor transmission rate of packaaina material at 40°C, 90%Rh | $g/(m^2 \cdot 24hr)$ | 0.1 | 0.0 | 0.1 | 0.2 | 1.5 | 6.6 | 0.0 | 0.1 |
| | Type of moisture absorbent | - | A | A | B | A | A | A | - | A |
| | Amount of moisture absorbent | g | 800 | 800 | 800 | 800 | 8,000 | 8,000 | 0 | 800 |
| | Value of Formula (2) | - | 0.0003 | 0.0000 | 0.0003 | 0.0006 | 0.0005 | 0.0021 | - | 0.0003 |
| | Ratio of storage environment in core tube hollow portion | % | 100 | 100 | 100 | 100 | 100 | 100 | 100 | 100 |

|  |  |  | Example B1 | Example B2 | Example B3 | Example B4 | Example B5 | Example B6 | Example B7 | Example B8 |
|---|---|---|---|---|---|---|---|---|---|---|
| External environment of packaging material | Temperature | °C | 30 | 30 | 30 | 30 | 30 | 30 | 30 | 30 |
|  | Dew point | °Cdp | 24 | 24 | 24 | 24 | 24 | 24 | 24 | 24 |
| Storage environment | Storage environment: initial temperature | °C | 23 | 23 | 23 | 23 | 23 | 23 | 30 | 23 |
|  | Storage environment: initial dew point | °Cdp | -20 | 12 | 12 | -20 | 12 | 12 | -32 | -20 |
|  | Air pressure | - | atmospheric pressure | atmospheric pressure | atmospheric pressure | atmospheric pressure | atmospheric pressure | atmospheric pressure | reduced pressure | atmospheric pressure |
| After 30-day storage | Storage environment: temperature | °C | 30 | 30 | 30 | 30 | 30 | 30 | 30 | 30 |
|  | Storage environment: dew point | °Cdp | -21 | -12 | -8 | -11 | -2 | 13 | -32 | -21 |
|  | Dielectric loss tangent at 10 GHz | - | 0.00032 | 0.00028 | 0.0015 | 0.00032 | 0.00032 | 0.00036 | 0.00032 | 0.00028 |
|  | Df change rate | % | 100 | 100 | 100 | 100 | 100 | 111 | 100 | 100 |
| After 365-day storage | Storage environment: temperature | °C | 30 | 30 | 30 | 30 | 30 | 30 | 30 | 30 |
|  | Storage environment: dew point | °Cdp | -21 | -12 | -8 | -11 | -2 | 15 | -32 | -21 |
|  | Dielectric loss tanaent at 10 GHz | - | 0.00032 | 0.00028 | 0.00152 | 0.00032 | 0.00034 | 0.00051 | 0.00032 | 0.00028 |
|  | Df chanae rate | % | 100 | 100 | 101 | 100 | 105 | 158 | 100 | 100 |
|  | Dew point change rate | - | -0.02 | -0.67 | -0.63 | 0.26 | -0.54 | 0.33 | 0.00 | -0.02 |

EP 4 733 221 A1

38

[Table 6]

EP 4 733 221 A1

Table 6

| | | | Comparative Example B1 | Reference Example B | Comparative Example B2 | Comparative Example B3 | Comparative Example B4 |
|---|---|---|---|---|---|---|---|
| Glass fabric | Style | - | Q1035 | L1035 | Q1035 | Q1035 | Q1035 |
| | Heat-deoiling temperature | °C | 600 | 370 | 1,000 | 370 | 600 |
| | Heat-deoiling time | - | 60 sec | 72 hr | 60 sec | 72 hr | 60 sec |
| | Surface treatment type | - | A+B | A+B | A+B | A | - |
| | Dielectric loss tangent at 10 GHz | - | 0.00032 | 0.0026 | 0.00028 | 0.0015 | 0.00028 |
| | Basis weight | $g/m^2$ | 23.2 | 24.2 | 23.2 | 23.2 | 23.2 |
| | Thickness | $\mu m$ | 34 | 34 | 34 | 34 | 34 |
| | Ignition loss | % | 0.052 | 0.621 | 0.052 | 0.124 | 0.012 |
| Packaging material and absorbent | Packagina material: shape | - | film | film | box | box | film |
| | Surface area | $m^2$ | 2.5 | 2.5 | 4.0 | 4.0 | 2.5 |
| | Packagina material: type | - | E | E | G | G | E |
| | Water vapor transmission rate of packaging material at 40°C, 90%Rh | $g/(m^2 24hr)$ | 11 | 11 | 50 | 50 | 11 |
| | Type of moisture absorbent | - | A | A | A | - | - |
| | Amount of moisture absorbent | g | 8,000 | 8,000 | 8,000 | - | - |
| | Value of Formula (2) | - | 0.0034 | 0.0034 | 0.0250 | - | - |
| | Ratio of storage environment in core tube hollow portion | % | 100 | 100 | 100 | 100 | 100 |
| External environment of packaging material | Temperature | °C | 30 | 30 | 30 | 30 | 30 |
| | Dew point | °Cdp | 24 | 24 | 24 | 24 | 24 |
| Storage environment | Storage environment: initial temperature | °C | 23 | 23 | 23 | 23 | 23 |
| | Storage environment: initial dew point | °Cdp | 12 | 12 | 12 | 12 | 12 |
| | Air pressure | - | atmospheric pressure | atmospheric pressure | atmospheric pressure | atmospheric pressure | atmospheric pressure |

40

(continued)

| | | | Comparative Example B1 | Reference Example B | Comparative Example B2 | Comparative Example B3 | Comparative Example B4 |
|---|---|---|---|---|---|---|---|
| After 30-day storage | Storage environment: temperature | °C | 30 | 30 | 30 | 30 | 30 |
| | Storage environment: dew point | °Cdp | 20 | 20 | 24 | 24 | 24 |
| | Dielectric loss tangent at 10 GHz | - | 0.00042 | 0.0026 | 0.00035 | 0.0019 | 0.00041 |
| | Df change rate | % | 130 | 100 | 127 | 126 | 147 |
| After 365-day storage | Storage environment: temperature | °C | 30 | 30 | 30 | 30 | 30 |
| | Storage environment: dew point | °Cdp | 22 | 22 | 24 | 24 | 24 |
| | Dielectric loss tangent at 10 GHz | - | 0.00066 | 0.0026 | 0.00054 | 0.0027 | 0.00063 |
| | Df change rate | % | 206 | 100 | 192 | 181 | 225 |
| | Dew point change rate | - | 5.00 | 5.00 | NG | - | - |

In Example B1, the dielectric loss tangent of the glass fabric did not change after the long-term storage (after 30 days and after 365 days); however, in Comparative Example B1, the dielectric loss tangent of the glass fabric greatly increased. In Comparative Example B1, due to the high water vapor transmission rate of the bag used for packaging the glass fabric, the moisture inflow amount was large, and this made it difficult to sufficiently reduce the dew point inside the bag even with the use of the moisture absorbent. On the other hand, in Reference Example B in which the glass fabric had a dielectric loss tangent of more than 0.00200, no increase in the dielectric loss tangent was observed even in the same storage environment as that of Comparative Example B1.

<Types of Core Tubes>

[Table 7]

Table 7

| Material and Shape | | H | I | J |
|---|---|---|---|---|
| Material and Shape | | FRP | FRP | paper tube |
| Water vapor transmission rate | g/(m$^2$ × 24 hr) | 0.1 | 1.0 | 9.6 |

<Example B9>

The rolled glass fabric obtained in Example B1 was packaged in a packaging material A wider than the roll width (aluminum laminate film, thickness: 99 μm, water vapor transmission rate: 0.1 g/(m$^2$ × 24 hr)) under an environment having a temperature of 23°C, and the moisture absorbent A (800 g) was enclosed inside. In a state where a dry air having a dew point of -20°Cdp was enclosed inside the packaging material A and the dew point was thereby adjusted to be -20°Cdp, an opening was hermetically sealed by thermocompression bonding. The excess packaging material on one side was pushed into the hollow portion of the core tube to obtain a glass fabric package having a recess extending from one end of the core tube to the inside of the hollow portion. The packaging material A had a surface area of 3.5 m$^2$, and the volume occupied by a space constituting the inside of the package was 20% with respect to the volume of the hollow portion of the core tube. Thereafter, the glass fabric package was moved to and stored in an external environment having a temperature of 30°C and a dew point of 24°Cdp. The glass fabric was taken out and evaluated after 30 days and 365 days.

<Example B 10>

The rolled glass fabric obtained in Example B1 was packaged in a packaging material A (aluminum laminate film, thickness: 99 μm, water vapor transmission rate: 0.1 g/(m$^2$ × 24 hr)) under an environment having a temperature of 23°C, and the moisture absorbent A (800 g) was enclosed inside. The packaging material A, which was shaped into a tube to conform to the inner wall of the core tube, was inserted into the core tube on which the rolled glass fabric was wound. In a state where a dry air having a dew point of -20°Cdp was enclosed inside the packaging material A covering the roll outer surface and the dew point was thereby adjusted to be -20°Cdp, the packaging material A covering the roll outer surface and the tube-shaped packaging material A penetrating the inside of the core tube were thermocompression-bonded to hermetically seal the openings, whereby an annular glass fabric package in which the external environment penetrates its hollow portion was obtained. In this case, the packaging material A had a surface area of 3.0 m$^2$, and the volume occupied by a space constituting the inside of the package was 5% with respect to the volume of the hollow portion of the core tube. Thereafter, the glass fabric package was moved to and stored in an external environment having a temperature of 30°C and a dew point of 24°Cdp. The glass fabric was taken out and evaluated after 30 days and 365 days.

<Example B 11>

A rolled glass fabric was obtained in the same manner as in Example B1, except that the obtained glass fabric was wound on an FRP core tube H having a water vapor transmission rate of 0.1 g/(m$^2$ × 24 hr). This rolled glass fabric was packaged in a packaging material A (aluminum laminate film, thickness: 99 μm, water vapor transmission rate: 0.1 g/(m$^2$ × 24 hr)) under an environment having a temperature of 23°C, and the moisture absorbent A (800 g) was enclosed inside. In a state where a dry air having a dew point of -20°Cdp was enclosed inside the packaging material A and the dew point was thereby adjusted to be -20°Cdp, the film at the opening was attached to the exposed outer surface of the core tube with a moisture-proof airtight tape to hermetically seal the opening, whereby a glass fabric package was obtained. In this case, the packaging material A had a surface area of 2.0 m$^2$, the core tube had an outer surface area of 1.0 m$^2$, and the volume occupied by a space constituting the inside of the package was 0% with respect to the volume of the hollow portion of the core tube. Thereafter, the glass fabric package was moved to and stored in an external environment having a temperature of 30°C and a dew point of 24°Cdp. The glass fabric was taken out and evaluated after 30 days and 365 days.

<Example B12>

A rolled glass fabric was obtained in the same manner as in Example B1, except that the obtained glass fabric was wound on an FRP core tube I having a water vapor transmission rate of 1.0 g/(m$^2$ × 24 hr). This rolled glass fabric was packaged in a packaging material A (aluminum laminate film, thickness: 99 μm, water vapor transmission rate: 0.1 g/(m$^2$ × 24 hr)) under an environment having a temperature of 23°C, and the moisture absorbent A (1,200 g) was enclosed inside. In a state where a dry air having a dew point of -20°Cdp was enclosed inside the packaging material A and the dew point was thereby adjusted to be -20°Cdp, the film at the opening was attached to the exposed outer surface of the core tube with a moisture-proof airtight tape to hermetically seal the opening, whereby a glass fabric package was obtained. In this case, the packaging material A had a surface area of 2.0 m$^2$, the core tube had an outer surface area of 1.0 m$^2$, and the volume occupied by a space constituting the inside of the package was 0% with respect to the volume of the hollow portion of the core tube. Thereafter, the glass fabric package was moved to and stored in an external environment having a temperature of 30°C and a dew point of 24°Cdp. The glass fabric was taken out and evaluated after 30 days and 365 days.

<Comparative Example B5>

A rolled glass fabric was obtained in the same manner as in Example B1, except that the obtained glass fabric was wound on a paper core tube J having a water vapor transmission rate of 9.6 g/(m$^2$ × 24 hr). This rolled glass fabric was packaged in a packaging material E (polyethylene film, thickness: 45 μm, moisture permeability: 11 g/(m$^2$ × 24 hr)) under an environment having a temperature of 23°C and a dew point of 12°Cdp, and the moisture absorbent A (8,000 g) was enclosed inside. The film at the opening was attached to the core tube with a moisture-proof airtight tape to hermetically seal the opening, whereby a glass fabric package was obtained. In this case, the packaging material E had a surface area of 1.8 m$^2$, the core tube had an outer surface area of 0.8 m$^2$, and the volume occupied by a space constituting the inside of the package was 0% with respect to the volume of the hollow portion of the core tube. Thereafter, the glass fabric package was moved to and stored in an external environment having a temperature of 30°C and a dew point of 24°Cdp. The glass fabric was taken out and evaluated after 30 days and 365 days.

The production conditions and the evaluation results that relate to Examples B9 to B12 and Comparative Example B5 are shown in Table below.

[Table 8]

Table 8

| | | | Example B9 | Example B10 | Example B11 | Example B12 | Comparative Example B5 |
|---|---|---|---|---|---|---|---|
| Glass fabric | Style | - | Q1035 | Q1035 | Q1035 | Q1035 | Q1035 |
| | Heat-deoiling temperature | °C | 600 | 600 | 600 | 600 | 600 |
| | Heat-deoiling time | - | 60 sec | 60 sec | 60 sec | 60 sec | 60 sec |
| | Surface treatment type | - | A+B | A+B | A+B | A+B | A+B |
| | Dielectric loss tangent at 10 GHz | - | 0.00032 | 0.00032 | 0.00032 | 0.00032 | 0.00032 |
| | Basis weight | g/m$^2$ | 23.2 | 23.2 | 23.2 | 23.2 | 23.2 |
| | Thickness | μm | 34 | 34 | 34 | 34 | 34 |
| | Ignition loss | % | 0.052 | 0.052 | 0.052 | 0.052 | 0.052 |
| Packaging material and absorbent | Packagina material: shape | - | film | film | film/core tube | film/core tube | film/core tube |
| | Surface area | m$^2$ | 3.5 | 3.0 | 2.0/1.0 | 2.0/1.0 | 1.8/0.8 |
| | Packagina material: type | - | A | A | A+H | A+I | E+J |
| | Water vapor transmission rate of packaging material at 40°C, 90%Rh | g/(m$^2$·24hr) | 0.1 | 0.1 | 0.1/0.1 | 0.1/1.0 | 11/9.6 |
| | Type of moisture absorbent | - | A | A | A | A | A |
| | Amount of moisture absorbent | g | 800 | 800 | 800 | 1,200 | 8,000 |
| | Value of Formula (2) | - | 0.0004 | 0.0004 | 0.0004 | 0.0010 | 0.0034 |
| | Ratio of storage environment in core tube hollow portion | % | 20 | 5 | 0 | 0 | 0 |
| External environment of packaging material | Temperature | °C | 30 | 30 | 30 | 30 | 30 |
| | Dew point | °Cdp | 24 | 24 | 24 | 24 | 24 |
| Storage environment | Storage environment: initial temperature | °C | 23 | 23 | 23 | 23 | 23 |
| | Storage environment: initial dew point | °Cdp | -20 | -20 | -20 | -20 | 12 |
| | Air pressure | - | atmospheric pressure | atmospheric pressure | atmospheric pressure | atmospheric pressure | atmospheric pressure |

44

(continued)

| | | | Example B9 | Example B10 | Example B11 | Example B12 | Comparative Example B5 |
|---|---|---|---|---|---|---|---|
| After 30-day storage | Storage environment: temperature | °C | 30 | 30 | 30 | 30 | 30 |
| | Storage environment: dew point | °Cdp | -20 | -20 | -20 | -10 | 20 |
| | Dielectric loss tangent at 10 GHz | - | 0.00032 | 0.00032 | 0.00032 | 0.00032 | 0.00040 |
| | Df change rate | % | 100 | 100 | 100 | 100 | 124 |
| After 365-day storage | Storage environment: temperature | °C | 30 | 30 | 30 | 30 | 30 |
| | Storage environment: dew point | °Cdp | -20 | -20 | -20 | -10 | 22 |
| | Dielectric loss tangent at 10 GHz | - | 0.00032 | 0.00032 | 0.00032 | 0.00032 | 0.00065 |
| | Df change rate | % | 100 | 100 | 100 | 100 | 202 |
| | Dew point change rate | - | 0.00 | 0.00 | 0.00 | 0.29 | 5.0 |

In Examples B1 to B12, the dielectric loss tangent of each glass fabric did not change after the long-term storage (after 30 days and after 365 days); however, in Comparative Example B5, the dielectric loss tangent of the glass fabric greatly increased.

REFERENCE SIGNS LIST

10: Glass fabric package
11: Core tube
12: Glass fabric
13: Film
13a: Outer film
13b: Inner film
14: Recess
15: Joint
16: Moisture absorbent

**Claims**

1. A method of storing a glass fabric, wherein

   the glass fabric is configured using glass yarns containing plural filaments as warp yarns and weft yarns, and has a dielectric loss tangent at 10 GHz of 0.00200 or less, and
   the method comprises storing the glass fabric in an atmosphere that has an average dew point of 18°Cdp or lower and an average temperature of 100°C or lower under the atmospheric pressure of a storage environment.

2. The method according to claim 1, wherein a silicon (Si) content in the glass yarns is 95.0% by mass to 100% by mass in terms of silicon dioxide ($SiO_2$).

3. The method according to claim 1 or 2, wherein the glass fabric has, on its surface, a surface treatment agent containing a silane coupling agent.

4. The method according to claim 3, wherein the surface treatment agent contains a silane coupling agent represented by the following Formula (1):

$$X(R)_{3-n}SiY_n \qquad (1)$$

   (wherein, X represents an organic functional group having at least one of an amino group or a radical-reactive unsaturated double bond group; each Y independently represents an alkoxy group; n represents an integer of 1 to 3; and each R independently represents a group selected from the group consisting of a methyl group, an ethyl group, and a phenyl group).

5. The method according to claim 4, wherein the surface treatment agent contains two or more kinds of silane coupling agents that are different in X of Formula (1).

6. The method according to claim 3, wherein the surface treatment agent contains two or more kinds of silane coupling agents that are different in molecular weight.

7. The method according to claim 3, further comprising, prior to the storing:

   the step of surface-treating the glass fabric with the surface treatment agent containing a silane coupling agent; and
   the step of opening the filaments of the thus surface-treated glass fabric.

8. The method according to claim 1 or 2, wherein the dielectric loss tangent at 10 GHz of the glass fabric is 0.00051 to 0.00200.

9.  The method according to claim 1 or 2, wherein the warp yarns and/or the weft yarns of the glass fabric have a thread count in a range of 66 to 120 yarns/inch (= 66 to 120 yarns/25 mm).

10. The method according to claim 1 or 2, further comprising, prior to the storing, the step of heating the glass fabric at a temperature of 600°C or higher while transporting the glass fabric in a roll-to-roll manner.

11. The method according to claim 1 or 2, wherein the glass fabric is stored as a package in which the glass fabric is packaged in a box and/or a film-like packaging material.

12. The method according to claim 11, wherein

    the glass fabric is stored as a package in which the glass fabric is packaged in a film-like packaging material, and
    the film-like packaging material has a thickness of 50 $\mu$m or more.

13. The method according to claim 11, wherein

    the glass fabric is stored as a package in which the glass fabric is packaged in a film-like packaging material, and
    the film-like packaging material is an aluminum laminate film.

14. The method according to claim 11, wherein

    the glass fabric is stored as a package in which the glass fabric is in the state of a roll wound on a hollow columnar core tube and packaged in a film-like packaging material, and
    the film-like packaging material has a recess extending from one or both ends of the core tube into a hollow portion, or has an annular shape penetrating the hollow portion of the core tube.

15. The method according to claim 14, wherein a ratio of the volume occupied by a space constituting the inside of the film-like packaging material is 50% or less with respect to the volume of the hollow portion of the core tube.

16. The method according to claim 14, wherein the film-like packaging material has an annular shape penetrating the hollow portion of the core tube.

17. The method according to claim 14, wherein the package is configured such that the glass fabric is hermetically sealed from the external environment by the film-like packaging material and the core tube.

18. The method according to claim 14, wherein the core tube has a water vapor transmission rate of 8 g/(m$^2 \times$ 24 hr) or lower as measured under the conditions of 40°C and 90%Rh.

19. The method according to claim 11, wherein the packaging material has a water vapor transmission rate of 8 g/(m$^2 \times$ 24 hr) or lower at a measurement temperature of 40°C and a measurement humidity of 90%Rh.

20. The method according to claim 11, wherein the package is configured to be dehumidified such that the inside of the package maintains an average dew point of 18°Cdp or lower.

21. The method according to claim 1 or 2, comprising storing the glass fabric at an average dew point of 13°Cdp to 18°Cdp under the atmospheric pressure of the storage environment.

22. The method according to claim 1 or 2, comprising storing the glass fabric at an average dew point of -21°Cdp or lower under the atmospheric pressure of the storage environment.

23. The method according to claim 11, wherein the package contains a moisture absorbent.

24. The method according to claim 23, wherein the amount of the enclosed moisture absorbent satisfies the following Formula (2):

    WVTR [g/(m$^2 \times$ 24 hr)] $\times$ Package surface area [m$^2$]/Amount of enclosed moisture absorbent [g] $\leq$ 0.0030     (2)

    (wherein, WVTR represents the water vapor transmission rate of the packaging material at a measurement temperature of 40°C and a measurement humidity of 90%Rh).

25. The method according to claim 23, wherein the moisture absorbent is at least one selected from the group consisting of silica gel, calcium oxide, calcium chloride, calcined diatomaceous earth, synthetic zeolite, a clay-based desiccant, phosphorus pentoxide, magnesium sulfate, copper sulfate, magnesium chloride, cobalt chloride, granular soda lime, and magnesium perchlorate.

26. The method according to claim 23, wherein the moisture absorbent is a sheet-form moisture absorbent.

27. The method according to claim 1 or 2, wherein the atmosphere is a dry air having an average dew point of 18°Cdp or lower, or a gas that has an average dew point of 18°Cdp or lower and contains at least one selected from the group consisting of nitrogen, argon, and oxygen.

28. The method according to claim 1 or 2, wherein the pressure of the atmosphere is reduced to lower than the atmospheric pressure.

29. The method according to claim 1 or 2, wherein the glass fabric is stored in a storage room in **which the** dew point and the temperature are controlled.

30. The method according to claim 1 or 2, wherein the glass fabric has a basis weight (glass fabric mass) in a range of 8 to 25 g/m$^2$.

31. A glass fabric package, comprising:

    a packaging material; and
    a glass fabric housed inside the packaging material,
    wherein the glass fabric is configured using glass yarns containing plural filaments as warp yarns and weft yarns,
    the glass fabric has a dielectric loss tangent at 10 GHz of 0.00200 or less,
    the packaging material is hermetically sealed, and
    the packaging material has a water vapor transmission rate of 8 g/(m$^2$ × 24 hr) or lower as measured under the conditions of 40°C and 90%Rh.

32. The glass fabric package according to claim 31, wherein the packaging material is a box and/or a film.

33. The glass fabric package according to claim 32, wherein

    the packaging material is a film, and
    the film has a thickness of 50 μm or more.

34. The glass fabric package according to claim 32, wherein

    the packaging material is a film, and
    the film is an aluminum laminate film.

35. The glass fabric package according to claim 32, wherein

    the glass fabric is packaged in a film in the state of a roll wound on a hollow columnar core tube, and
    the film has a recess extending from one or both ends of the core tube into a hollow portion, or **has an annular** shape penetrating the hollow portion of the core tube.

36. The glass fabric package according to claim 35, wherein a ratio of the volume occupied by a space constituting the inside of the film is 50% or less with respect to the volume of the hollow portion of the core tube.

37. The glass fabric package according to claim 35, wherein the film has an annular shape penetrating the hollow portion of the core tube.

38. The glass fabric package according to claim 35, wherein the package is configured such that the glass fabric is hermetically sealed from the external environment by the film and the core tube.

39. The glass fabric package according to claim 35, wherein the core tube has a water vapor transmission rate of 8 g/(m$^2$ × 24 hr) or lower as measured under the conditions of 40°C and 90%Rh.

40. The glass fabric package according to claim 31 or 32, wherein the inside of the packaging material has a dew point of 18°Cdp or lower.

41. The glass fabric package according to claim 31 or 32, wherein the inside of the packaging material has a dew point of 13°Cdp to 18°Cdp.

42. The glass fabric package according to claim 31 or 32, wherein the inside of the packaging material has a dew point of -21°Cdp or lower.

43. The glass fabric package according to claim 31 or 32, wherein the glass fabric is in the state of a roll.

44. The glass fabric package according to claim 31 or 32, wherein a moisture absorbent is enclosed inside the packaging material.

45. The glass fabric package according to claim 44, wherein the amount of the enclosed moisture absorbent satisfies the following Formula (2):

WVTR [g/(m$^2$ × 24 hr)] × Package surface area [m$^2$]/Amount of enclosed moisture absorbent [g] ≤ 0.0030　　　(2)

(wherein, WVTR represents the water vapor transmission rate of the packaging material at a measurement temperature of 40°C and a measurement humidity of 90%Rh).

46. The glass fabric package according to claim 44, wherein the moisture absorbent is at least one selected from the group consisting of silica gel, calcium oxide, calcium chloride, calcined diatomaceous earth, synthetic zeolite, a clay-based desiccant, phosphorus pentoxide, magnesium sulfate, copper sulfate, magnesium chloride, cobalt chloride, granular soda lime, and magnesium perchlorate.

47. The glass fabric package according to claim 44, wherein the moisture absorbent is in the form of a sheet.

48. The glass fabric package according to claim 31 or 32, wherein the inside of the packaging material is filled with a dry air having a dew point of 18°Cdp or lower, or a gas that has a dew point of 18°Cdp or lower and contains at least one selected from the group consisting of nitrogen, argon, and oxygen.

49. The glass fabric package according to claim 31 or 32, wherein the pressure inside the packaging material is lower than the atmospheric pressure.

50. The glass fabric package according to claim 31 or 32, wherein a silicon (Si) content in the glass yarns is 95.0% by mass to 100% by mass in terms of silicon dioxide (SiO$_2$).

51. The glass fabric package according to claim 31 or 32, wherein the glass fabric is treated with a surface treatment agent containing a silane coupling agent.

52. The glass fabric package according to claim 51, wherein the surface treatment agent contains a silane coupling agent represented by the following Formula (1):

$$X(R)_{3-n}SiY_n　　　(1)$$

(wherein, X represents an organic functional group having at least one of an amino group or a radical-reactive unsaturated double bond group; each Y independently represents an alkoxy group; n represents an integer of 1 to 3; and each R independently represents a group selected from the group consisting of a methyl group, an ethyl group, and a phenyl group).

53. The glass fabric package according to claim 52, wherein the surface treatment agent contains two or more kinds of silane coupling agents that are different in X of Formula (1).

**54.** The glass fabric package according to claim 51, wherein the surface treatment agent contains two or more kinds of silane coupling agents that are different in molecular weight.

**55.** The glass fabric package according to claim 31 or 32, wherein the dielectric loss tangent at 10 GHz of the glass fabric is 0.00051 to 0.00200.

**56.** The glass fabric package according to claim 31 or 32, wherein the warp yarns and/or the weft yarns of the glass fabric have a thread count in a range of 66 to 120 yarns/inch (= 66 to 120 yarns/25 mm).

**57.** The glass fabric package according to claim 31 or 32, wherein the glass fabric has a basis weight (glass fabric mass) in a range of 8 to 25 g/m$^2$.

Fig. 1

EP 4 733 221 A1

(1a)            (1b)            (1c)

Fig. 2

## INTERNATIONAL SEARCH REPORT

| International application No. |
|---|
| **PCT/JP2024/003073** |

**A.    CLASSIFICATION OF SUBJECT MATTER**

*B65D 81/24*(2006.01)i; *B65D 81/26*(2006.01)i; *C03C 25/40*(2006.01)i; *D03D 15/267*(2021.01)i; *D06M 13/513*(2006.01)i
FI:    B65D81/24 G; B65D81/26 N; C03C25/40; D03D15/267; D06M13/513

According to International Patent Classification (IPC) or to both national classification and IPC

**B.    FIELDS SEARCHED**

Minimum documentation searched (classification system followed by classification symbols)

B65D81/24; B65D81/26; B65D85/672; C03C25/00-25/70; D03D15/267; D06M13/513

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-195689 A (SHIN-ETSU CHEMICAL CO., LTD.) 27 December 2021 (2021-12-27) paragraphs [0039], [0053]-[0063], [0077], [0091], [0095], [0097] | 1-57 |
| Y | JP 2017-47972 A (THE NIPPON SYNTHETIC CHEMICAL INDUSTRY CO., LTD.) 09 March 2017 (2017-03-09) paragraphs [0022]-[0047], [0077]-[0109], fig. 1-2 | 1-57 |
| Y | JP 2005-255225 A (DAI NIPPON PRINTING CO., LTD.) 22 September 2005 (2005-09-22) paragraphs [0020], [0024]-[0027], [0038], fig. 3-4 | 12-18, 20-57 |
| Y | JP 2014-221666 A (STAR PLASTIC KOGYO KK) 27 November 2014 (2014-11-27) paragraphs [0033]-[0034], fig. 1 | 14-15, 28, 35-36, 49 |
| Y | CD-ROM of the specification and drawings annexed to the request of Japanese Utility Model Application No. 51749/1992 (Laid-open No. 43796/1995) (MITSUBISHI KASEI POLY TECH INCORPORATED COMPANY) 19 September 1995 (1995-09-19), fig. 1 | 14-15, 35-36 |

☑ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **05 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/003073**

**C.    DOCUMENTS CONSIDERED TO BE RELEVANT**

| Category* | Citation of document, with indication, where appropriate, of the relevant passages | Relevant to claim No. |
|---|---|---|
| P, X | JP 7375902 B1 (SHIN-ETSU CHEMICAL CO., LTD.) 08 November 2023 (2023-11-08) paragraphs [0014], [0016], [0027], [0031]-[0054], tables 1-2 | 1-7, 11, 19-23, 25, 27, 29, 31-32, 40-44, 46, 48-57 |
| A | JP 2017-47973 A (THE NIPPON SYNTHETIC CHEMICAL INDUSTRY CO., LTD.) 09 March 2017 (2017-03-09) | 1-57 |
| A | JP 2014-91782 A (HITACHI CHEMICAL COMPANY, LTD.) 19 May 2014 (2014-05-19) | 1-57 |
| A | JP 2006-27702 A (FUJI PHOTO FILM CO., LTD.) 02 February 2006 (2006-02-02) | 1-57 |

Form PCT/ISA/210 (second sheet) (July 2022)

## INTERNATIONAL SEARCH REPORT
### Information on patent family members

International application No.

**PCT/JP2024/003073**

| Patent document cited in search report | | | Publication date (day/month/year) | Patent family member(s) | | | Publication date (day/month/year) |
|---|---|---|---|---|---|---|---|
| JP | 2021-195689 | A | 27 December 2021 | US 2021/0395929 A1 paragraphs [0050], [0076]-[0093], [0112], [0136]-[0138], [0146]-[0150], [0153]-[0154] | | | |
| | | | | EP 3929166 | | A1 | |
| | | | | CN 113800778 | | A | |
| JP | 2017-47972 | A | 09 March 2017 | KR 10-2018-0048983 | | A | |
| | | | | CN 108349641 | | A | |
| JP | 2005-255225 | A | 22 September 2005 | (Family: none) | | | |
| JP | 2014-221666 | A | 27 November 2014 | (Family: none) | | | |
| JP | 7-43796 | U1 | 19 September 1995 | (Family: none) | | | |
| JP | 7375902 | B1 | 08 November 2023 | (Family: none) | | | |
| JP | 2017-47973 | A | 09 March 2017 | KR 10-2018-0048983 | | A | |
| | | | | CN 108349641 | | A | |
| JP | 2014-91782 | A | 19 May 2014 | (Family: none) | | | |
| JP | 2006-27702 | A | 02 February 2006 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023124261 A
- JP 2023129381 A
- JP 2018127747 A, Kokai
- JP 2021063320 A, Kokai
- JP 7269416 B